# EUROPEAN PATENT APPLICATION

(11) **EP 3 604 202 A1**
(43) Date of publication of application: **05.02.2020**
(21) Application number: 17901636.5
(22) Date of filing: 27.12.2017
(51) Int. Cl.: B66F 19/00, A61H 1/02, B25J 11/00, B25J 19/06

(54) **LOAD-HOLDING HANDLE PART AND POWER ASSIST SUIT**

(30) Priority: 22.03.2017 JP 2017055662; 23.03.2017 JP 2017057852; 23.03.2017 JP 2017057854
(71) Applicant: Kubota Corporation, Osaka-shi, Osaka 556-8601 (JP)
(72) Inventor: SAKANO Tomoyoshi, Sakai-shi Osaka 590-0823 (JP); NISHIDA Keisuke, Sakai-shi Osaka 590-0823 (JP); NAKATSUKA Masaki, Sakai-shi Osaka 590-0823 (JP); TAKAKI Takahiro, Sakai-shi Osaka 590-0823 (JP); KOTANI Shinsuke, Sakai-shi Osaka 590-0823 (JP)
(74) Representative: Cabinet Beau de Loménie
(86) International application number: PCT/JP2017/046964
(87) International publication number: WO 2018/173411

(57) **Abstract**

The present invention enables a hand portion for load-holding to accommodate packages that have various shapes. The present invention includes a base portion (15) for connection to a suspension mechanism, manual operation portions (23, 24) that are provided on the base portion (15) and are for operating the suspension mechanism, and a support portion (29) that has a holding portion (28) for holding a package and can be attached to and detached from the base portion (15).

## Description

### Technical Field

The present invention relates to a hand portion for load-holding and an assist suit.

### Background Art

### [1]

Some hand portions for load-holding are suspended from an assist device worn by a worker, a winch supported to the ceiling portion of a building, or the like, and are used to hold a package.

An example of an assist device used while being worn by a worker is disclosed in Patent Document 1. In Patent Document 1, arm portions extend forward from a main body portion that is attached to the worker, and hand portions for load-holding are connected to wires (corresponding to suspension mechanisms) that extend downward from the arm portions.

A lifting/lowering device for winding and unwinding the wires is provided in the main body portion, and manual operation portions for causing the lifting/lowering device to wind and unwind the wires are provided in the hand portions.

Accordingly, the worker can hold the hand portions in their holds and hold a package with the hand portions, and can raise and lower the hand portions by operating the manual operation portions with their hands on the hand portions.

### [2]

There are also assist suits that can assist worker movement.

For example, a conventional assist suit is described in Patent Document 2. This assist suit includes a main body portion (called a "frame structure" in this document) for attachment to a worker's back portion, driving devices (called "thigh drive motors" in this document) that can assist worker movement, and setting switches (called a "- button" and a "+ button" in this document) that enable the worker to manually set the assist characteristic (called "assist power" in this document) of assistance provided by the driving devices

### [3]

There are also assist suits that can assist worker movement.

For example, a conventional assist suit is described in Patent Document 3. The assist suit described in Patent Document 3 includes driving devices (called "leg action portions" in this document) that can assist worker movement, and a control portion (called a "control unit" in this document) that controls the driving of the driving devices. The control portion drives the driving devices based on switch operations.

### Prior Art Documents

### Patent Documents

Patent Document 1: JP 2015-182832A
Patent Document 2: JP 2015-47313A
Patent Document 3: JP 2016-129918A

### Disclosure of the Invention

### Problem to be Solved by the Invention

### [1]

The following are issues corresponding to Background Art [1].

The hand portions in Patent Document 1 have a channel-shaped cross-section and are envisioned for use with a package that has holding openings in upper portions of side wall portions of the package, as with a beer case. Accordingly, the package is supported to the hand portions by inserting the hand portions into the holding openings.

In contrast with packages that have holding openings in upper portions as with a beer case or the like, there are also packages whose holding openings or handle portions are at different positions or have different shapes, and packages that do not have holding openings or handle portions.

An object of the present invention is to enable hand portions for load-holding to accommodate packages having various shapes.

### [2]

The following are problems corresponding to Background Art [2].

It is also conceivable for an assist suit to be loaned for use through a lease or the like. In such a case, when there are multiple assist suits, it is troublesome to manually operate the setting switches for each assist suit in order to reset the assist characteristics that were individually set by workers as in the above-described conventional technology. Also, it is not preferable for the assist characteristic settings to be reset by an operation mistake while a worker is using the assist suit.

In view of these circumstances, there has been desire for the provision of an assist suit that enables the assist characteristic settings to be reset without trouble, and that also enables avoiding the case where the assist characteristic settings are reset by an operation mistake during use.

### [3]

The following are problems corresponding to Background Art [3].

However, with the conventional assist suits described above, even in the case where the worker is not wearing the assist suit for example, the driving devices can be driven when a switch is pressed. If the driving devices are driven while the assist suit is not being worn in this way, there is a risk of leading to problems such as the assist suit falling over while at rest and becoming damaged, or unexpected operations being performed while the worker is wearing the assist suit.

In view of these circumstances, there has been desire for the provision of an assist suit that can prevent mistaken operation while not being worn.

### Means for Solving Problem

### [1]

The following is a means for solving the problems corresponding to Issue [1].

A hand portion for load-holding according to the present invention includes:
a base portion configured to be connected to a suspension mechanism;
a manual operation portion that is provided on the base portion and is for operating the suspension mechanism; and
a support portion that can be attached to and detached from the base portion and has a holding portion for holding a package.

According to the present invention, the support portion can be attached to and detached from the base portion that is connected to the suspension mechanism and provided with the manual operation portion, and the support portion has the holding portion for holding a package.

Accordingly, by preparing a support portion that has a holding portion suited for holding a certain package, and attaching that support portion to the base portion of the hand portion, it is possible to appropriately hold the package with the hand portion.

If the hand portion is to then be used with a package that has a different shape, by preparing a support portion that has a holding portion suited for holding that package, and attaching that support portion to the base portion of the hand portion, it is possible to appropriately hold the package with the hand portion.

As described above, with the hand portion for load-holding, in order to accommodate packages that have different shapes, by preparing support portions that have holding portions suited for holding respective package, it is possible to accommodate packages that have various shapes, and it is possible to improve the usability of the hand portion for load-holding.

A hand portion for load-holding is often configured such that a control device or the like for operating the suspension mechanism and the manual operation portion of the hand portion are connected by a harness or the like, and operation signals from the manual operation portion of the hand portion are sent to the control device via the harness or the like in order for operation of the suspension mechanism.

In the above-described configuration, according to the present invention, the support portion is attached to the base portion of the hand portion that is provided with the manual operation portion, and therefore even if the support portion is replaced with a different support portion, the connection between the manual operation portion of the hand portion and the control device or the like can be left as-is, and there is no reason to disconnect the manual operation portion of the hand portion and the control device or the like.

In the present invention, it is preferable that the base portion has a vertically oriented lateral portion, an upper portion that extends to one lateral side from an upper portion of the lateral portion, and a lower portion that extends to the same lateral side as the upper portion from a lower portion of the lateral portion, and
the support portion is attached between the upper portion and the lower portion in a state of contact with the upper portion and the lower portion.

According to the present invention, the base portion of the hand portion has the vertically oriented lateral portion, the upper portion that extends to one lateral side from the upper portion of the lateral portion, and the lower portion that extends to the same lateral side as the upper portion from the lower portion of the lateral portion.

Accordingly, even when the support portion is not attached to the base portion of the hand portion, a package can be held by the hand portion by hooking the package on the lower portion of the hand portion, thus making it possible to improve the usability of the hand portion for load-holding.

When the support portion is to be attached to the above-described base portion of the hand portion, the support portion is attached to the base portion of the hand portion so as to be sandwiched between the upper portion and the lower portion of the base portion of the hand portion in the up-down direction, and therefore the support portion can be securely attached to the base portion of the hand portion.

In the present invention, it is preferable that a protruding portion that protrudes toward the upper portion is formed on an end portion of the lower portion on a side opposite to the lateral portion, and
the support portion is attached between the upper portion and the lower portion by being inserted between the upper portion and the lower portion and between the lateral portion and the protruding portion, at an end portion of the base portion on one side in a direction along the lateral portion.

According to the present invention, in the above-described base portion of the hand portion that has the lateral portion, the upper portion, and the lower portion, the protruding portion that protrudes toward the upper portion is formed on the end portion of the lower portion on the side opposite to the lateral portion.

Accordingly, even when the support portion is not attached to the base portion of the hand portion, if a package is to be held by the hand portion by hooking the package on the lower portion of the hand portion, the protruding portion becomes caught on the package, thus making it possible to reliably hold the package with the hand portion.

When the support portion is to be attached to the above-described base portion of the hand portion, the support portion is attached to the base portion of the hand portion so as to be sandwiched between the upper portion and the lower portion of the base portion of the hand portion in the up-down direction, and furthermore so as to be sandwiched between the lateral portion and the protruding portion of the base portion of the hand portion in the lateral direction, and therefore the support portion can be securely attached to the base portion of the hand portion.

In the present invention, it is preferable that the hand portion for load-holding further includes:
an orientation-changeable first stopper portion configured to change between a disengaged orientation of allowing insertion of the support portion at the end portion of the base portion on the one side in the direction along the lateral portion, and an engaged orientation of stopping movement of the support portion toward the end portion of the base portion on the one side in the direction along the lateral portion in a state where the support portion is attached between the upper portion and the lower portion; and
a second stopper portion configured to stop movement of the support portion toward an end portion of the base portion on an other side in the direction along the lateral portion in a state where the support portion is attached between the upper portion and the lower portion.

When the support portion is to be attached to the above-described base portion of the hand portion that has the lateral portion, the upper portion, the lower portion, and the protruding portion, the support portion is attached to the base portion of the hand portion by inserting the support portion into the base portion of the hand portion at the end portion of the base portion of the hand portion on the one side in the direction along the lateral portion.

In this case, according to the present invention, the first stopper portion is operated to the disengaged orientation, and the support portion is inserted into the base portion of the hand portion at the end portion on the one side of the base portion of the hand portion, and then after the support portion has been inserted to a predetermined position in the base portion of the hand portion, the first stopper portion is operated to the engaged orientation, and thus the support portion is attached to the base portion of the hand portion.

According to the present invention, when the support portion has been attached to the base portion of the hand portion, even if the support portion attempts to move to one side or the other side of the base portion of the hand portion, the movement of the support portion is stopped by the first stopper portion and the second stopper portion, and therefore the support portion can be securely attached to the base portion of the hand portion.

When the support portion is to be detached from the base portion of the hand portion, the first stopper portion is operated to the disengaged orientation, and the support portion is moved in the direction opposite to that when attaching the support portion, and thus the support portion can be detached by being withdrawn from the end portion on the one side of the base portion of the hand portion.

In the present invention, it is preferable that the holding portion and the support portion are separate members, and the holding portion is attached to the support portion.

In the case of preparing support portions that have holding portions that are suited to holding respective packages that are the work targets as described above, according to the present invention, by preparing various holding portions that are suited to holding respective packages, preparing only one or a few types of support portions, and attaching a holding portion to the support portion, it is possible to obtain a support portion that has a holding portion that is suited to holding a certain package.

In this case, according to the present invention, the same support portion can be shared, and this is advantageous in terms of reducing production cost.

In the present invention, it is preferable that the base portion has a vertically oriented lateral portion, an upper portion that extends to one lateral side from an upper portion of the lateral portion, and a lower portion that extends to the same lateral side as the upper portion from a lower portion of the lateral portion,
the support portion is attached between the upper portion and the lower portion in a state of contact with the upper portion and the lower portion,
a first recessed portion is provided in a portion of the support portion on a side corresponding to the upper portion,
a second recessed portion is provided in a portion of the support portion on a side corresponding to the lateral portion, and is in communication with the first recessed portion, and
the holding portion is attached to the support portion by being fitted into the first recessed portion on a side opposite to the second recessed portion, and extending from the first recessed portion into the second recessed portion.

According to the present invention, the base portion of the hand portion has the vertically oriented lateral portion, the upper portion that extends to one lateral side from the upper portion of the lateral portion, and the lower portion that extends to the same lateral side as the upper portion from the lower portion of the lateral portion.

Accordingly, even when the support portion is not attached to the base portion of the hand portion, a package can be held by the hand portion by hooking the package on the lower portion of the hand portion, thus making it possible to improve the usability of the hand portion for load-holding.

When the support portion is to be attached to the above-described base portion of the hand portion, the support portion is attached to the base portion of the hand portion so as to be sandwiched between the upper portion and the lower portion of the base portion of the hand portion in the up-down direction, and therefore the support portion can be securely attached to the base portion of the hand portion.

According to the present invention, when the holding portion is to be attached to the support portion, the holding portion is attached by being fitted into the first recessed portion and the second recessed portion of the support portion, and the holding portion is thus securely attached to the support portion.

In the present invention, it is preferable that the support portion provided with the holding portion having a different specification can be attached to and detached from the base portion.

According to the present invention, a support portion having a holding portion that has a different specification can be attached to and detached from the base portion of the hand portion (i.e., can be replaced), and therefore it is possible to select and use a support portion that has a holding portion that is optimum for a certain package, thus making it possible to improve the usability of the hand portion for load-holding.

### [2]

The following is a means for solving the problems corresponding to Issue [2].

An assist suit according to the present invention includes: a main body portion configured to be attached to a back portion of a worker;
a driving device configured to assist a movement of the worker;
a setting switch configured to enable manually setting an assist characteristic of assistance provided by the driving device; and
a reset switch configured to enable manually resetting the assist characteristic setting set by the setting switch,
wherein the reset switch is arranged at a position biased to one side of a left-right center of the main body portion, and the setting switch is arranged at a position biased to an other side of the left-right center of the main body portion.

According to the present invention, the assist characteristic of the driving device can be set to an optimum characteristic for the physique or the like of the worker or the like, by manually operating the setting switch. Also, the set assist characteristic can be reset without trouble by merely manually operating the reset switch, rather than manually operating the setting switch multiple times. Moreover, the reset switch is arranged on the opposite side of the left-right center of the main body portion from the setting switch, and therefore the worker will not mistakenly operate the reset switch instead of the setting switch for example, thus making it possible to avoid the case where the assist characteristic setting is reset by a mistaken operation during use.

In this way, according to the present invention, it is possible to enable the assist characteristic setting to be reset without trouble, and to also enable avoiding the case where the assist characteristic setting is reset by an operation mistake during use.

In the present invention, it is preferable that the reset switch enables switching to an other mode having a different assist effect by a short-press operation, and enables resetting the assist characteristic setting by a long-press operation having a longer press time than the short-press operation.

According to this configuration, the reset switch is realized by dual-use of the switch for switching to another mode having a different assist effect, and therefore the structure can be made simpler than in the case where the switch for switching the mode and the reset switch are provided separately, for example.

In the present invention, it is preferable that the setting switch enables switching to an adjustment mode for adjustment of the assist characteristic by a press operation, and
in the adjustment mode, the assist characteristic setting can be reset by operating the reset switch.

According to this configuration, even if the reset switch is operated in the normal mode, the assist characteristic setting is not reset, whereas in the adjustment mode that is switched to by pressing the setting switch, the assist characteristic setting can be reset by manually operating the reset switch. For this reason, it is possible to favorably avoid the case where the assist characteristic setting is reset by a mistaken operation during use.

In the present invention, it is preferable that when the reset switch is operated, the assist characteristic is reset to a pre-set standard value.

According to this configuration, the assist characteristic is reset to a pre-set standard value by simply operating the reset switch, and therefore in the case where multiple assist suits are managed by a rental company such as a leasing company, for example, the operation of initializing the assist suit setting can be performed without trouble.

In the present invention, it is preferable that a waist assist device configured to assist a stand-up movement of a worker is provided as the driving device, and
at least one of an upper limit angle and a lower limit angle of an angle range of assist power generated by the waist assist device is included as a parameter that defines the assist characteristic pertaining to the waist assist device, and in the adjustment mode, at least one of the upper limit angle and the lower limit angle can be changed.

According to this configuration, the angle range of assist power generated by the waist assist device has different optimum values depending on the physique or the like of the worker. As the assist characteristic pertaining to the waist assist device, at least one of the upper limit angle and the lower limit angle of the angle range can be changed based on a manual operation performed on the setting switch. The setting of the angle range pertaining to the waist assist device can be easily reset by operating the reset switch.

In the present invention, it is preferable that an arm assist device configured to suspend a target object and assist a target object lifting movement is provided as the driving device, and
at least one of an upper limit height and a lower limit height of a target object suspension position height range of assist power generated by the arm assist device is included as a parameter that defines the assist characteristic pertaining to the arm assist device, and in the adjustment mode, at least one of the upper limit height and the lower limit height can be changed.

According to this configuration, the target object suspension position height range of assist power generated by the arm assist device has different optimum values depending on the type of work, for example. As the assist characteristic pertaining to the arm assist device, at least one of the upper limit height and the lower limit height of the height range can be changed based on a manual operation performed on the setting switch. The setting of the height range pertaining to the arm assist device can be easily reset by operating the reset switch.

In the present invention, it is preferable that when the reset switch is operated, the assist characteristic setting pertaining to a waist assist device that is the driving device and the assist characteristic setting pertaining to an arm assist device that is the driving device are both reset together when the reset switch is operated.

According to this configuration, compared to the case where only either the assist characteristic setting pertaining to the waist assist device or the assist characteristic setting pertaining to the arm assist device is reset by operating the reset switch for example, it is possible to reset all of the assist characteristics that can be set for the assist suit without trouble.

### [3]

The following is a means for solving the problems corresponding to Issue [3].

An assist suit according to the present invention includes: a driving device configured to assist a movement of a worker;
a control unit configured to control driving of the driving device; and
a detection sensor configured to detect that the assist suit is being worn by a worker,
wherein the control unit is configured to permit driving of the driving device if the detection sensor has detected that the assist suit is being worn by the worker, and prohibit driving of the driving device if the detection sensor has not detected that the assist suit is being worn by the worker.

According to the present invention, the driving device is driven to assist a worker's movement only if the detection sensor has detected that the assist suit is being worn by the worker, and the driving device is not driven if the detection sensor has not detected that the assist suit is being worn by the worker. Therefore, according to the present invention, it is possible to prevent mistaken operation when the assist suit is not being worn. For this reason, it is possible to avoid problems caused by mistaken operation of the driving device when the assist suit is not being worn, such as the assist suit falling over while at rest and becoming damaged, or unexpected operations being performed while the worker is wearing the assist suit.

In the present invention, it is preferable that a back sensor configured to detect pressing force from a back portion of the worker when wearing the assist suit is provided as the detection sensor.

According to this configuration, driving of the driving device is permitted only when the back sensor has detected the back portion of the worker, thus making it possible to avoid the case where the driving device is mistakenly driven while the worker is putting on the assist suit, for example.

In the present invention, it is preferable that the assist suit further includes:
a back pad configured to come into contact with the back portion of the worker when wearing the assist suit,
wherein the back sensor is arranged on a back surface side of the back pad that is on a side opposite to the back portion of the worker.

According to this configuration, the back sensor is hidden behind the back pad, thus making it possible to reduce the possibility of the worn state being mistakenly detected by the back sensor. Also, the back sensor detects the back portion when the back portion of the worker is pressed against the back pad, and therefore the driving of the driving device can be permitted when the assist suit is firmly pressed against the back portion of the worker.

In the present invention, it is preferable that the assist suit further includes:
a shoulder belt configured to be placed on a shoulder portion of the worker,
wherein a tension sensor configured to detect tension of the shoulder belt is provided as the detection sensor.

According to this configuration, the driving of the driving device is permitted only when the worker has placed the shoulder belt on their shoulder and the tension sensor has detected the tension state, thus making it possible to avoid the case where the driving device is mistakenly driven while the worker is putting on the assist suit, for example.

In the present invention, it is preferable that a waist sensor configured to detect pressing force from a waist portion of the worker when wearing the assist suit is provided as the detection sensor.

According to this configuration, the driving of the driving device is permitted only when the worker has wrapped the waist belt around their waist and the waist sensor has detected the waist portion, thus making it possible to avoid the case where the driving device is mistakenly driven while the worker is putting on the assist suit, for example.

In the present invention, it is preferable that the assist suit further includes:
a waist pad configured to come into contact with the waist portion of the worker when wearing the assist suit,
wherein the waist sensor is arranged on a back surface side of the waist pad that is on a side opposite to the waist portion of the worker.

According to this configuration, the waist sensor is hidden behind the waist pad, thus making it possible to reduce the possibility of the waist portion being mistakenly detected by the waist sensor. Also, the waist sensor detects the waist portion when the waist portion of the worker is pressed against the waist pad, and therefore the driving of the driving device can be permitted when the assist suit is firmly attached to the waist portion of the worker.

In the present invention, it is preferable that the assist suit further includes:
a waist belt configured to be wrapped around and attached to a waist portion of the worker by engagement of a pair of belt portions with each other,
wherein an engagement sensor configured to detect engagement of the belt portions is provided as the detection sensor.

According to this configuration, the driving of the driving device is permitted only when the worker has wrapped the waist belt around their waist and engaged the belt portions, and the engagement sensor has detected the engaged state, thus making it possible to avoid the case where the driving device is mistakenly driven while the worker is putting on the assist suit, for example.

### Brief Description of the Drawings

FIG. 1 is a diagram showing a first embodiment (the same follows up to FIG. 20), and more specifically is a right side view of a state where a worker is wearing an assist device.
FIG. 2 is rear view of the state where the worker is wearing the assist device.
FIG. 3 is an overall perspective view of the assist device.
FIG. 4 is a side view of a base portion of a hand portion.
FIG. 5 is a side view of a cover of the hand portion.
FIG. 6 is an exploded perspective view of the base portion and the cover of the hand portion.
FIG. 7 is a side view of the base portion and the cover of the hand portion.
FIG. 8 is a side view of a support portion of the hand portion.
FIG. 9 is a rear view of the support portion of the hand portion.
FIG. 10 is a perspective view of the support portion of the hand portion.
FIG. 11 is a perspective view of a holding portion of the hand portion.
FIG. 12 is a perspective view of a first stopper portion of the hand portion.
FIG. 13 is a side view of a state where the support portion is being attached to the base portion of the hand portion.
FIG. 14 is a side view of the state where the support portion is being attached to the base portion of the hand portion.
FIG. 15 is a side view of the state where the support portion is being attached to the base portion of the hand portion.
FIG. 16 is a side view of the state where the support portion has been attached to the base portion of the hand portion.
FIG. 17 is a rear view of the state where the support portion has been attached to the base portion of the hand portion.
FIG. 18 is a perspective view of another holding portion of the hand portion.
FIG. 19 is a perspective view of yet another holding portion of the hand portion.
FIG. 20 is a perspective view of still another holding portion of the hand portion.
FIG. 21 is a diagram showing a second embodiment (the same follows up to FIG. 27), and more specifically is a side view of a state where a worker is wearing an assist suit.
FIG. 22 is a rear view of the assist suit while being worn by the worker.
FIG. 23 is a perspective view of the assist suit.
FIG. 24 is a plan view of a right switch case.
FIG. 25 is a plan view of a left switch case.
FIG. 26 is a block diagram showing a control configuration of the assist suit.
FIG. 27 is a flowchart showing a flow of operations when resetting assist characteristics.
FIG. 28 is a diagram showing a third embodiment (the same follows up to FIG. 31), and more specifically is a side view of a state where a worker is wearing an assist suit.
FIG. 29 is a rear view of the assist suit while being worn by the worker.
FIG. 30 is a perspective view of the assist suit.
FIG. 31 is a block diagram showing a control configuration of the assist suit.

### Best Mode for Carrying out the Invention

### First Embodiment

The following describes a first embodiment of the present invention with reference to the drawings.

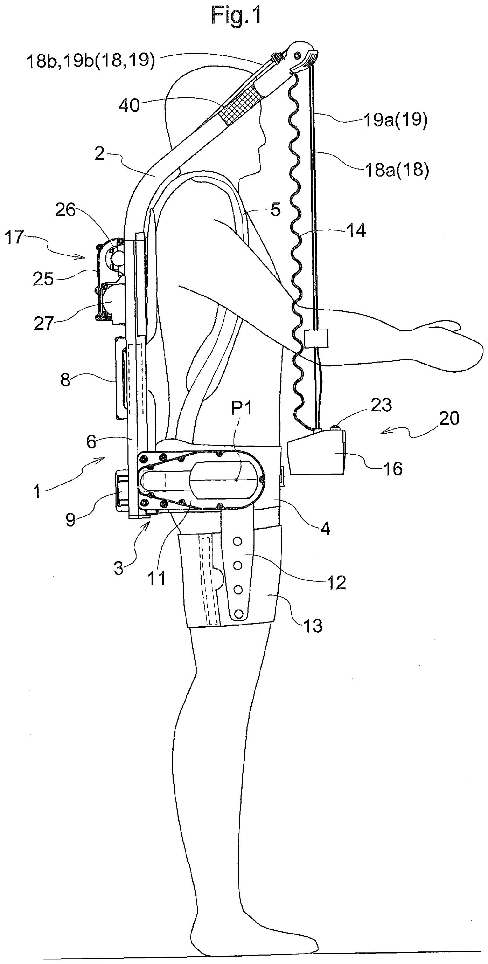

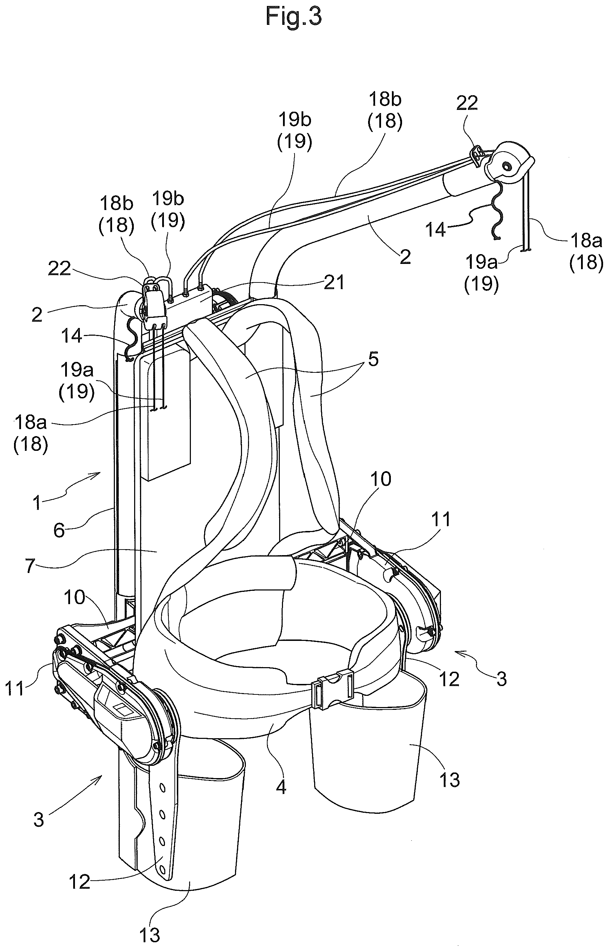

FIGS. 1 to 20 show a state in which hand portions for load-holding 20 of the present invention have been attached to an assist device that is used while being worn by a worker.

The front-rear direction and the left-right direction in the embodiments of the present invention are defined as follows unless particularly stated otherwise. In the state where the worker is wearing the assist device, the front side from the worker's viewpoint corresponds to "front", the rear side corresponds to "rear", the right side corresponds to "right", and the left side corresponds to "left".

### Overall configuration of assist device, and main body portion

As shown in FIGS. 1, 2, and 3, the assist device includes a main body portion 1 that is attached to a mid back portion of the worker, right and left arm portions 2 that extend upward from an upper portion of the main body portion 1, and right and left leg action portions 3 provided in a lower portion of the main body portion 1, and further includes an attachment belt 4 and right and left shoulder belts 5 for attachment to the worker.

As shown in FIGS. 1, 2, and 3, the main body portion 1 is frame-shaped and includes right and left vertical frames 6, a support plate 7 that is extends between and is coupled to the right and left vertical frames 6, and the like. The attachment belt 4 is attached to the leg action portions 3, and the shoulder belts 5 are attached to an upper portion of the front surface of the support plate 7. A control device 8 is coupled to a vertically intermediate portion of the rear surface of the support plate 7, and a battery 9 is attached to a lower portion of the rear surface of the support plate 7.

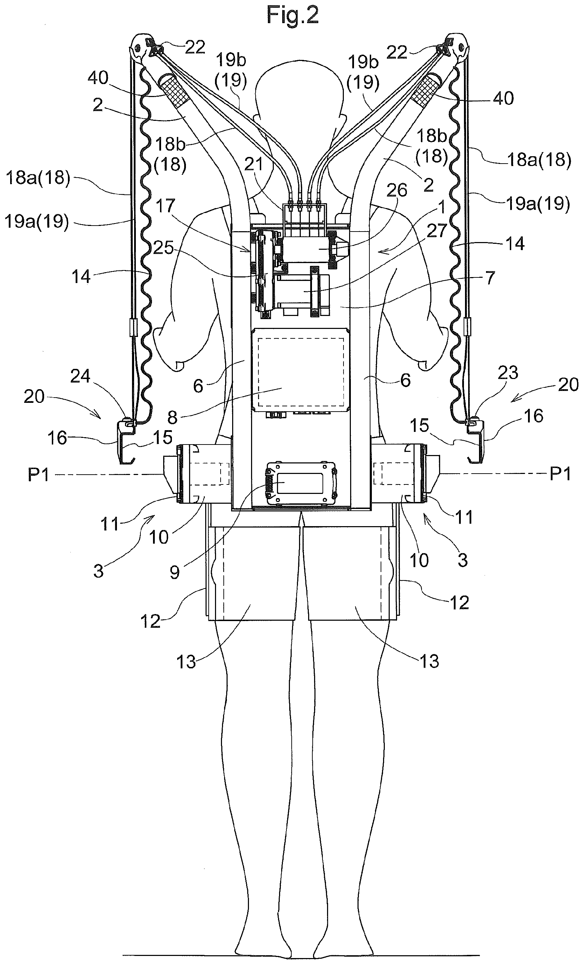

As shown in FIGS. 1 and 2, the main body portion 1 is attached to the mid back portion of the worker by the arm portions (shoulder portions) of the worker being put into the shoulder belts 5, and by the attachment belt 4 being wrapped around the waist portion of the worker.

As shown in FIGS. 1 and 2, the weight of the assist device and a package is mainly borne by the waist portion of the worker via the attachment belt 4, and the weight of the assist device and the package is stably supported by the waist portion of the worker. The right and left shoulder belts 5 mainly exhibit a function of preventing the main body portion 1 from moving backward away from the mid back portion of the worker.

### Right and left leg action portions

As shown in FIGS. 1, 2, and 3, the leg action portions 3 each have a base portion 10, a transmission case 11, an operation arm 12, a leg belt 13, and the like. The base portion 10 is supported to a lower portion of the support plate 7 so as to be capable of sliding in the left-right direction, and the transmission case 11 is coupled to an outer end portion of the base portion 10 and extends forward.

As shown in FIGS. 1, 2, and 3, the operation arm 12 is supported to a front portion of the transmission case 11 so as to be capable of swinging about a horizontal axis P1 extending in the left-right direction, and the leg belt 13, which is shaped as a wide belt, is coupled to an end portion of the operation arm 12. A transmission mechanism (not shown) constituted by multiple spur gears is provided inside the transmission case 11, an electrical motor (not shown) is provided inside the base portion 10, and the operation arm 12 is driven by the electrical motor via the transmission mechanism so as to swing about the horizontal axis P1.

As previously mentioned, when the worker wraps the attachment belt 4 around their waist portion in order to attach the main body portion 1 to their mid back portion, the right and left leg action portions 3 (base portions 10) can, together with the attachment belt 4, move in the left-right direction along the support plate 7.

Accordingly, the space between the right and left leg action portions 3 is determined so as to suit the worker's physique by adjusting the wrapping of the attachment belt 4 around the waist portion, and the positions of the right and left leg action portions 3 are determined by the attachment belt 4.

Thereafter, as shown in FIGS. 1 and 2, the worker wraps the leg belts 13 around their thigh portions and attaches the leg belts 13 to their thigh portions with use of a hook-and-loop fastener (not shown; Velcro (registered trademark)).

While the worker is wearing the assist device, the right leg action portion 3 (transmission case 11) is located on the right side of the waist portion of the worker, and the left leg action portion 3 (transmission case 11) is located on the left side of the waist portion of the worker.

### Right and left arm portions

As shown in FIGS. 1, 2, and 3, upper portions of the right and left vertical frames 6 extend diagonally forward and upward to positions beyond the right and left shoulder portions of the worker as the right and left arm portions 2, and pulleys (not shown) are rotatably supported to upper end portions of the arm portions 2.

As shown in FIGS. 1, 2, and 3, a lifting/lowering device 17 is coupled to an upper portion of the rear surface of the support plate 7, and two right wires 18 and 19 (corresponding to a suspension mechanism) and two left wires 18 and 19 (corresponding to a suspension mechanism) extend from the lifting/lowering device 17. An outer support portion 21 is coupled to an upper portion of the support plate 7, an outer support portion 22 is coupled to the upper portion of each of the arm portions 2, end portions of outer wires 18b and 19b of the wires 18 and 19 are connected to the outer support portions 21 and 22, and inner wires 18a and 19a of the wires 18 and 19 are connected to the lifting/lowering device 17.

As shown in FIGS. 1, 2, and 3, the inner wires 18a and 19a of the two right wires 18 and 19 are wrapped around the pulley at the upper end portion of the corresponding arm portion 2 and then extend downward, and the right hand portion 20 is connected to the inner wires 18a and 19a of the two right wires 18 and 19. The inner wires 18a and 19a of the two left wires 18 and 19 are wrapped around the pulley at the upper end portion of the corresponding arm portion 2 and then extend downward, and the left hand portion 20 is connected to the inner wires 18a and 19a of the two left wires 18 and 19.

### Lifting/lowering device

As shown in FIGS. 1 and 2, the lifting/lowering device 17 is coupled to the support plate 7. The lifting/lowering device 17 includes a vertically oriented transmission case 25 that houses a transmission mechanism (not shown), a support case 26 that is horizontally coupled to an upper portion of the transmission case 25, a electrical motor 27 that is horizontally coupled to a lower portion of the transmission case 25, and four rotating bodies (not shown) that can rotate about a horizontal axis inside the support case 26.

As shown in FIGS. 1 and 2, end portions of the outer wires 18b and 19b of the wires 18 and 19 are connected to the outer support portion 21, and the inner wires 18a and 19a of the wires 18 and 19 are respectively connected to the four rotating bodies inside the support case 26.

According to the above structure, the electrical motor 27 operates in accordance with the control device 8 as shown in FIGS. 1 and 2. Drive power from the electrical motor 27 is transmitted to the rotating bodies inside the support case 26 via the transmission mechanism inside the transmission case 25, and the rotating bodies are thus driven to rotate in the winding direction and the unwinding direction.

As shown in FIGS. 1 and 2, when the rotating bodies are driven to rotate in the winding direction by the electrical motor 27 in the lifting/lowering device 17, the inner wires 18a and 19a of the wires 18 and 19 are wound by the rotating bodies, and the hand portions 20 rise. When the rotating bodies are driven to rotate in the unwinding direction by the electrical motor 27, the inner wires 18a and 19a of the wires 18 and 19 are unwound from the rotating bodies, and the hand portions 20 descend.

An electromagnetic brake (not shown) is provided in the electrical motor 27. The electromagnetic brake is automatically disengaged when the electrical motor 27 operates, and the electromagnetic brake automatically engages when the electrical motor 27 is stopped or not receiving power.

### Overall configuration of hand portions

As shown in FIGS. 1, 2, and 13, the hand portions 20 each include a base portion 15 that is connected to the inner wires 18a and 19a of the wires 18 and 19, either a raising operation switch 23 (corresponding to a manual operation portion) or a lowering operation switch 24 (corresponding to a manual operation portion) that is attached to the base portion 15, a cover 16 that is attached to the base portion 15, a support portion 29 that is provided with a holding portion 28, and the like, and the support portion 29 is attached to the base portion 15.

As shown in FIGS. 1, 2, and 3, harnesses 14, which are connected to the control device 8, enter the right and left arm portions 2 through vertically intermediate portions thereof, pass through the arm portions 2, and extend to upper end portions of the arm portions 2. The harnesses 14 exit and extend downward from opening portions in the upper end portions of the right and left arm portions 2, and the harnesses 14 are connected to the raising operation switch 23 and the lowering operation switch 24.

### Configurations of base portion and cover of hand portion

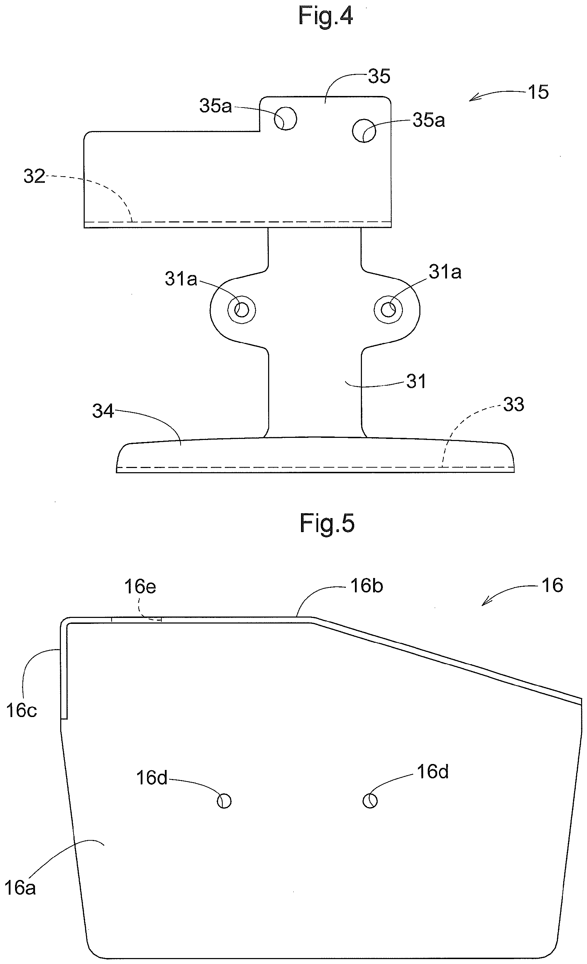

FIGS. 4 to 7 show the base portion 15 and the cover 16 of the right hand portion 20. The base portion 15 and the cover 16 of the right hand portion 20 are bilaterally symmetrical with the base portion 15 and the cover 16 of the left hand portion 20, and have the same configurations as them.

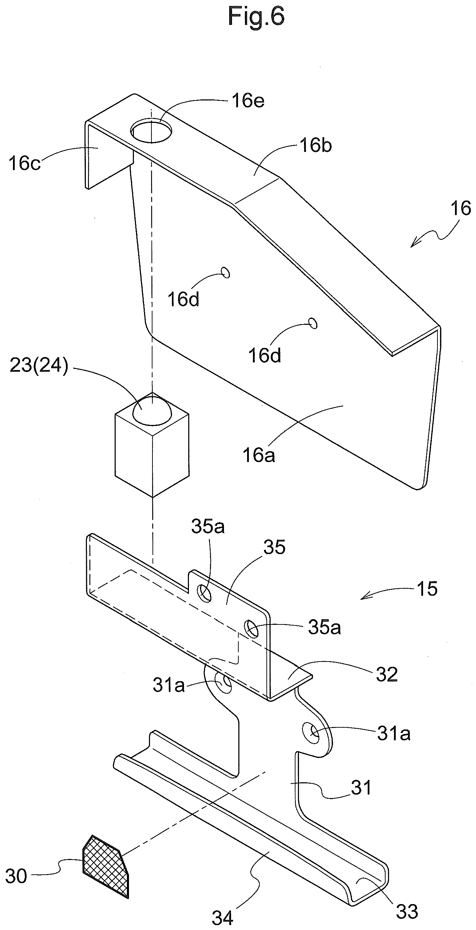

As shown in FIGS. 4 and 6, the base portion 15 is constituted by a folded metal plate.

The base portion 15 includes a vertically oriented lateral portion 31, an upper portion 32 that extends to one lateral side from an upper portion of the lateral portion 31, a lower portion 33 that extends to the same lateral side as the upper portion 32 from a lower portion of the lateral portion 31, a protruding portion 34 that protrudes toward the upper portion 32 (upward) from the side of the lower portion 33 that is opposite to the lateral portion 31 side, and a connection portion 35 that extends in the same direction as the protruding portion 34 (upward) from side of the upper portion 32 that is opposite to the lateral portion 31 side.

As shown in FIGS. 4 and 6, the inner wires 18a and 19a of the wires 18 and 19 are connected to connection holes 35a in the connection portion 35 of the base portion 15. The raising operation switch 23 (lowering operation switch 24) is attached to the upper portion 32 of the base portion 15. A hook-and-loop fastener 30 (Velcro (registered trademark)) is affixed to the lateral portion 31 of the base portion 15.

As shown in FIGS. 5 and 6, the cover 16 is constituted by integrally molded synthetic resin. The cover 16 includes a vertically oriented lateral portion 16a, an upper portion 16b and a front portion 16c that extend to one lateral side from an upper portion of the lateral portion 16a, and opening portions 16d and 16e are formed in the lateral portion 16a and the upper portion 16b.

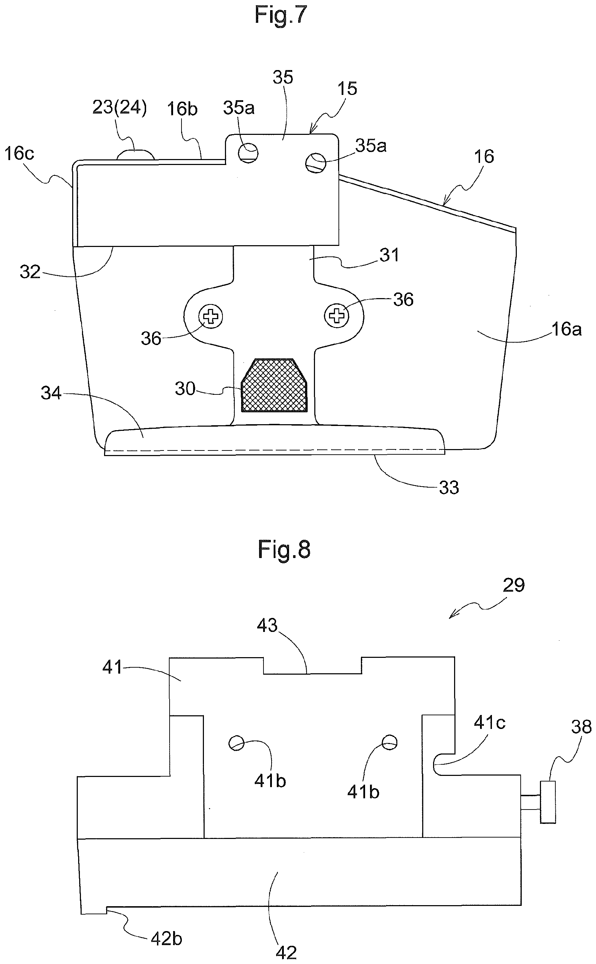

As shown in FIGS. 6 and 7, the lateral portion 16a of the cover 16 is placed against the lateral portion 31 of the base portion 15, the upper portion 16b of the cover 16 is placed on the upper side of the upper portion 32 of the base portion 15, and coupling members 36 are attached in opening portions 31a of the lateral portion 31 of the base portion 15 and the opening portions 16d of the cover 16, thus coupling the cover 16 to the base portion 15.

In this state, the raising operation switch 23 (lowering operation switch 24) extends upward from the opening portion 16e of the cover 16.

As shown in FIGS. 1 and 2, a hook-and-loop fastener 40 (Velcro (registered trademark)) is affixed to each of the arm portions 2.

When the hand portions 20 are not in use, after the later-described support portions 29 have been detached from the base portions 15, the hand portions 20 can be attached to the arm portions 2 by pressing the lateral portions 31 of the base portions 15 against the arm portions 2 such that the hook-and-loop fasteners 30 of the base portions 15 become attached to the hook-and-loop fasteners 40 of the arm portions 2.

### Configuration of support portions of hand portions

As shown in FIGS. 8, 9, and 10, the support portions 29 are each constituted by integrally molded synthetic resin, and the support portions 29 each include a narrow upper portion 41 and a wide lower portion 42.

As shown in FIGS. 8, 9, and 10, a side portion of the upper portion 41 of the support portion 29 (the portion of the support portion 29 on the side corresponding to the lateral portion 31 of the base portion 15) is provided with a protruding portion 41a that extends over the entire width of the upper portion 41 of the support portion 29. Coupling holes 41b are formed in the side portion of the upper portion 41 of the support portion 29 that is on the side opposite to the aforementioned side portion.

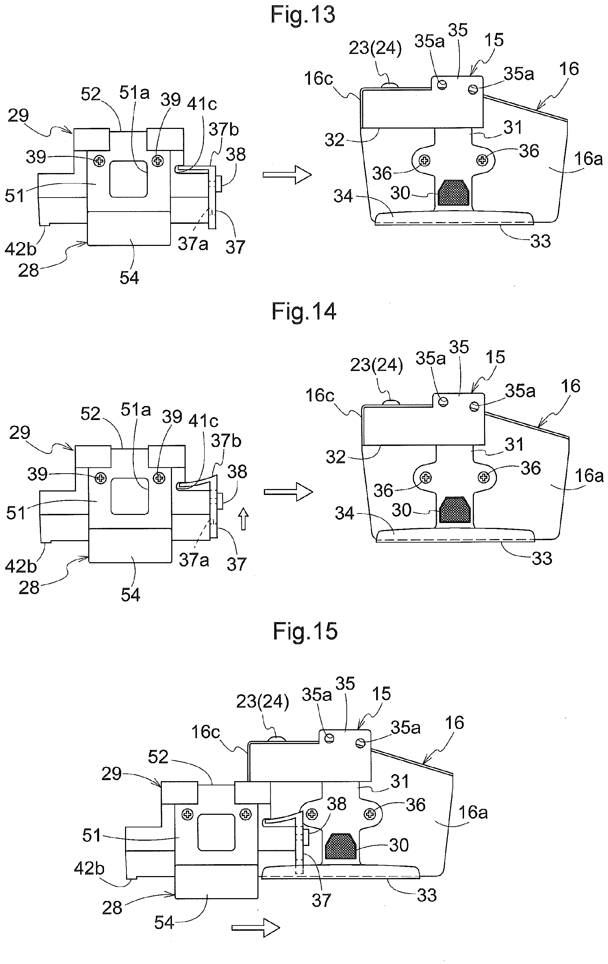

As shown in FIGS. 8, 9, and 10, a side portion of the lower portion 42 of the support portion 29 (the portion of the support portion 29 on the side corresponding to the lateral portion 31 of the base portion 15) is provided with a protruding portion 42a that extends over the entire width of the lower portion 42 of the support portion 29. As shown in FIG. 13, a first stopper portion 37 is provided in one end portion of the lower portion 42 of the support portion 29, and, as shown in FIGS. 8, 9, and 10, a second stopper portion 42b is formed facing downward in the other end portion of the lower portion 42 of the support portion 29.

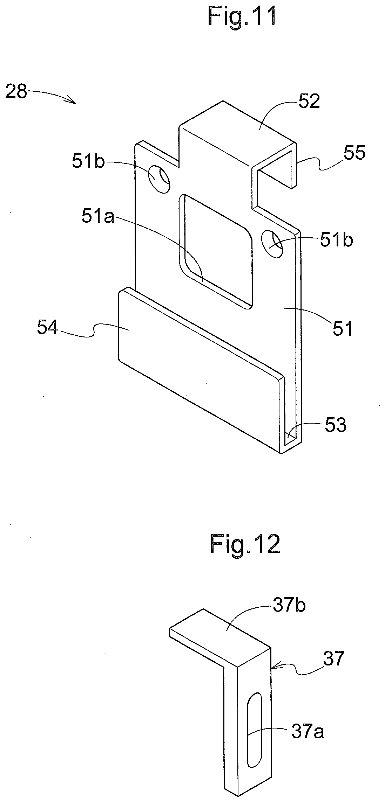

As shown in FIG. 12, the first stopper portion 37 is constituted by elastic synthetic resin that has been integrally molded into an angular member. The first stopper portion 37 includes an elongated hole 37a that extends vertically, and an elastically deformable arm portion 37b.

As shown in FIGS. 8, 9, 10, and 13, the end portion of the arm portion 37b of the first stopper portion 37 is inserted into a recessed portion 41c of the upper portion 41 of the support portion 29, and the first stopper portion 37 is pressed against one end portion of the lower portion 42 of the support portion 29. A headed pin 38 is inserted into the elongated hole 37a of the first stopper portion 37 and coupled to the one end portion of the lower portion 42 of the support portion 29.

As shown in FIGS. 13 and 14, due to the elongated hole 37a of the first stopper portion 37 and the pin 38, the first stopper portion 37 is supported so as to be capable of sliding vertically to a lower engaged orientation (see FIG. 13), in which the first stopper portion 37 is separated from the one end portion of the lower portion 42 of the support portion 29, and also to an upper disengaged orientation (see FIG. 14). The first stopper portion 37 is biased to the engaged orientation due to the elasticity of the arm portion 37b of the first stopper portion 37.

As shown in FIGS. 8, 9, and 10, a first recessed portion 43 is provided in an upper portion of the upper portion 41 of the support portion 29 (a portion on the side of the support portion 29 that corresponds to the upper portion 32 of the base portion 15).

A second recessed portion 44 is provided in a side portion of the upper portion 41 and the lower portion 42 of the support portion 29 (the portion on the side of the support portion 29 that corresponds to the lateral portion 31 of the base portion 15), and the second recessed portion 44 is connected to the first recessed portion 43 and extends over the entirety of the support portion 29 in the up-down direction.

### Configuration of holding portions of hand portions

As shown in FIG. 11, the holding portions 28 are each constituted by a folded metal plate.

As shown in FIG. 11, the holding portion 28 includes a vertically oriented lateral portion 51, an upper portion 52 that extends to one lateral side from an upper portion of the lateral portion 51, a lower portion 53 that extends from a lower portion of the lateral portion 51 to the side opposite to the upper portion 52, an upward portion 54 that extends toward the upper portion 52 (upward) from the side of the lower portion 53 that is opposite to the lateral portion 51 side, and a downward portion 55 that extends in the direction opposite to the upward portion 54 (downward) from the side of the upper portion 52 that is opposite to the lateral portion 51 side. The lateral portion 51 of the holding portion 28 has an opening portion 51a for weight reduction and coupling holes 51b.

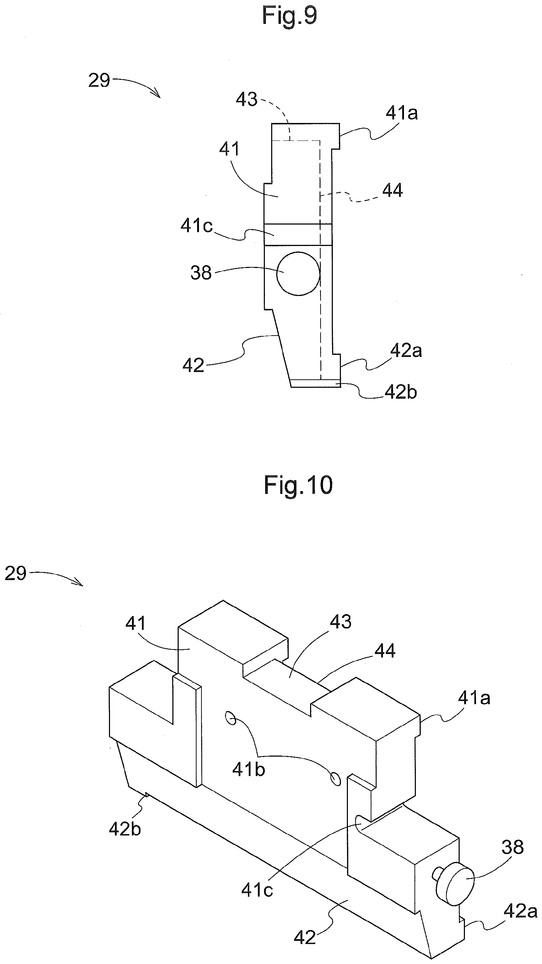

As shown in FIGS. 10, 11, and 13, the lateral portion 51 of the holding portion 28 is pressed against the side portion of the upper portion 41 of the support portion 29 that is on the side opposite to the second recessed portion 44, the upper portion 52 of the holding portion 28 is fitted into the first recessed portion 43 of the support portion 29, and the downward portion 55 of the holding portion 28 is fitted into the second recessed portion 44 of the support portion 29.

Accordingly, as shown in FIGS. 10, 11, and 13, the holding portion 28 is fitted into the first recessed portion 43 of the support portion 29 from the side of the support portion 29 that is opposite to the second recessed portion 44 side, and extends from the first recessed portion 43 of the support portion 29 to the second recessed portion 44. Screws 39 are attached in the coupling holes 51b of the lateral portion 51 of the holding portion 28 and further into the coupling holes 41b of the upper portion 41 of the support portion 29, and the holding portion 28 is thus attached to the support portion 29.

As shown in FIG. 11, the upward portions 54 of the holding portions 28 are inserted into openings in lateral portions of a package such that edges of the openings in the package enter the space between the lateral portions 51 and the upward portions 54 of the holding portions 28, and the edges of the openings of the package are thus supported by the lower portions 53 of the holding portions 28. The package is thus held by the holding portions 28.

### Attachment of support portion of hand portion to base portion of hand portion

FIG. 13 shows a state where the support portion 29 has been detached from the base portion 15. When the support portion 29 is to be attached to the base portion 15 in the state shown in FIG. 13, as shown in FIG. 14, the first stopper portion 37 is slid upward from the engaged orientation to the disengaged orientation against the biasing force of the arm portion 37b of the first stopper portion 37, and the support portion 29 is inserted into the base portion 15 from the end portion on one side of the base portion 15.

In this case, as shown in FIGS. 15, 16, and 17, the upper portion 41 of the support portion 29 comes into contact with the upper portion 32 of the base portion 15, and the lower portion 42 of the support portion 29 comes into contact with the lower portion 33 of the base portion 15.

The protruding portions 41a and 42a of the upper portion 41 and the lower portion 42 of the support portion 29 come into contact with the upper portion and the lower portion of the lateral portion 31 of the base portion 15, but the coupling members 36 and the hook-and-loop fastener 30 do not come into contact with the upper portion 41 and the lower portion 42 of the support portion 29.

The lower portion 42 of the support portion 29 comes into contact with the protruding portion 34 of the base portion 15, and the protruding portion 34 of the base portion 15 is located between the lower portion 42 of the support portion 29 and the lateral portion 51 of the holding portion 28.

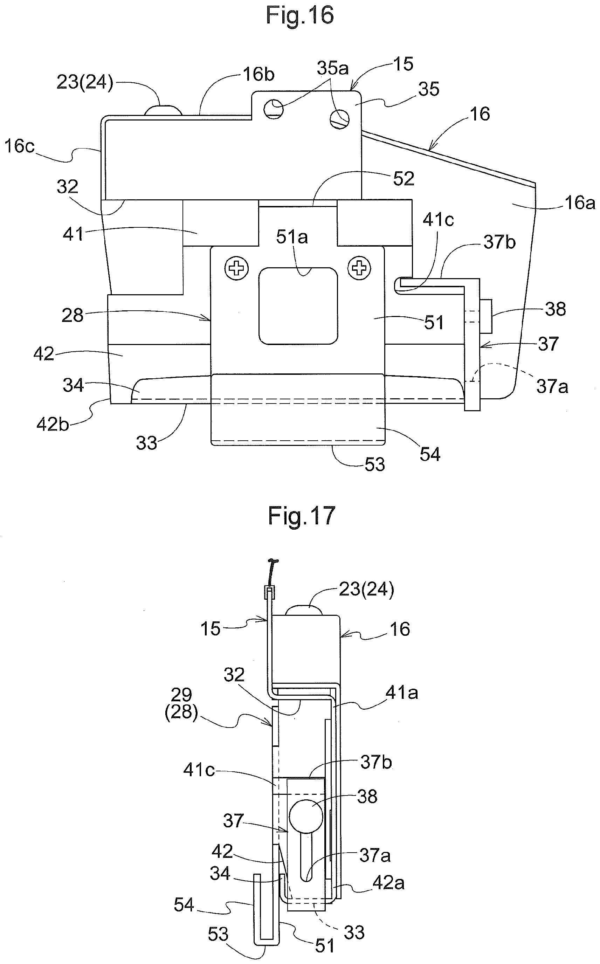

When the support portion 29 is slid into the base portion 15 as described above and the second stopper portion 42b of the lower portion 42 of the support portion 29 reaches the one end portion of the base portion 15 as shown in FIGS. 16 and 17, the first stopper portion 37 reaches the end portion of the base portion 15 on the other side, and then the first stopper portion 37 automatically slides to the engaged orientation due to the biasing force of the arm portion 37b of the first stopper portion 37. Accordingly, the support portion 29 is attached to the base portion 15.

As shown in FIGS. 16 and 17, when the support portion 29 has been attached to the base portion 15, the upper portion 41 of the support portion 29 is in contact with the upper portion 32 of the base portion 15, the lower portion 42 of the support portion 29 is in contact with the lower portion 33 of the base portion 15, and the support portion 29 is sandwiched between the upper portion 32 and the lower portion 33 of the base portion 15 in the up-down direction.

As shown in FIGS. 16 and 17, the protruding portions 41a and 42a of the upper portion 41 and the lower portion 42 of the support portion 29 are in contact with the upper portion and the lower portion of the lateral portion 31 of the base portion 15, the lower portion 42 of the support portion 29 is in contact with the protruding portion 34 of the base portion 15, and the support portion 29 is sandwiched between the lateral portion 31 and the protruding portion 34 of the base portion 15 in the lateral direction. According to the above state, the support portion 29 is securely attached to the base portion 15.

As shown in FIGS. 16 and 17, when the support portion 29 has been attached to the base portion 15, the first stopper portion 37 abuts against the other end portion of the lower portion 33 of the base portion 15, and the second stopper portion 42b of the lower portion 42 of the support portion 29 abuts against the one end portion of the lower portion 33 of the base portion 15.

According to the above state, even if the support portion 29 attempts to move to one side or the other side relative to the base portion 15, such movement of the support portion 29 is prevented by the first stopper portion 37 and the second stopper portion 42b of the lower portion 42 of the support portion 29.

When the support portion 29 is to be detached from the base portion 15, the first stopper portion 37 in the state shown in FIGS. 16 and 17 is slid upward from the engaged orientation to the disengaged orientation, and then the support portion 29 is withdrawn from the base portion 15 by moving the support portion 29 in the direction opposite to that described above, from the state shown in FIG. 16 to the state shown in FIG. 15.

### (1) Holding portion and support portion of hand portion having different specifications

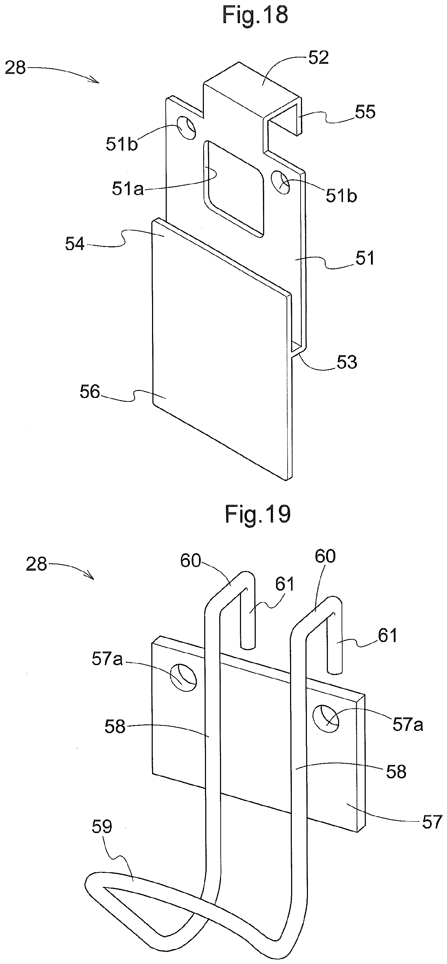

FIG. 18 shows a holding portion 28 that is different from the holding portion 28 shown in FIG. 11.

The holding portion 28 shown in FIG. 18 includes the lateral portion 51, the upper portion 52, the lower portion 53, the upward portion 54, the downward portion 55, and the opening portion 51a and the coupling holes 51b of the lateral portion 51 similarly to the holding portion 28 shown in FIG. 11, and further includes a downward portion 56 that extends downward beyond the lower portion 53 from the upward portion 54.

The holding portion 28 shown in FIG. 18 is attached to the same support portion 29 as the support portion 29 to which the holding portion 28 shown in FIG. 11 is attached (see FIGS. 8, 9, and 10). In this case, the holding portion 28 shown in FIG. 18 is attached to the support portion 29 in the same manner as the holding portion 28 shown in FIG. 11 is attached to the support portion 29.

When a package is to be held by the holding portions 28 shown in FIG. 18, the upward portions 54 and the downward portions 56 of the holding portions 28 are inserted into openings in lateral portions of the package such that edges of the openings in the package enter the space between the lateral portions 51 and the upward portions 54 of the holding portions 28, and the edges of the openings of the package are thus supported by the lower portions 53 of the holding portions 28. The package is thus held by the holding portions 28.

In this case, the downward portions 56 of the holding portions 28 abut against the inward surfaces below the openings of the package, and the downward portions 56 of the holding portions 28 suppress the case where the openings of the package come out of the lower portions 53 of the holding portions 28.

### (2) Holding portion and support portion of hand portion having different specifications

FIG. 19 shows a holding portion 28 that is different from the holding portion 28 shown in FIG. 11.

The holding portion 28 shown in FIG. 19 includes a coupling plate 57 that has coupling holes 57a, and a bar member that is bent and coupled to the coupling plate 57. The bar member includes two vertically oriented lateral portions 58 that are coupled to the coupling plate 57, a hook portion 59 that extends upward from lower portions of the lateral portions 58, two upper portions 60 that extend from upper portions of the lateral portions 58 in a direction opposite to the hook portion 59, and two downward portions 61 that extend downward from the sides of the upper portions 60 that are opposite to the lateral portion 58 side.

The holding portion 28 shown in FIG. 19 is attached to the same support portion 29 as the support portion 29 to which the holding portion 28 shown in FIG. 11 is attached (see FIGS. 8, 9, and 10).

The coupling plate 57 of the holding portion 28 is pressed against a side portion of the upper portion 41 of the support portion 29 that is on the side opposite to the second recessed portion 44, the upper portions 60 of the holding portion 28 are fitted into the first recessed portion 43 of the support portion 29, and the downward portions 61 of the holding portion 28 are fitted into the second recessed portion 44 of the support portion 29. Screws 39 are attached in the coupling holes 57a of the coupling plate 57 of the holding portion 28 and further into the coupling holes 41b of the upper portion 41 of the support portion 29, and the holding portion 28 is thus attached to the support portion 29.

### (3) Holding portion and support portion of hand portion having different specifications

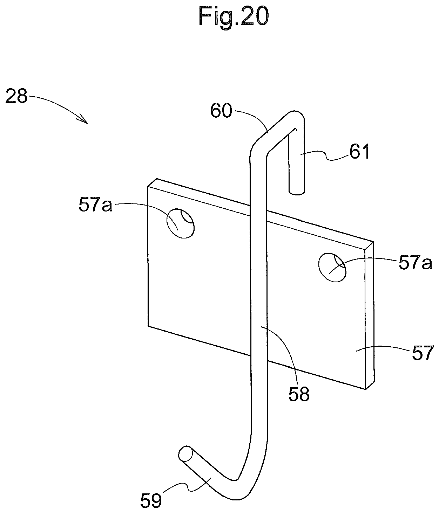

FIG. 20 shows a holding portion 28 that is different from the holding portion 28 shown in FIG. 11. The holding portion 28 shown in FIG. 20 has a configuration similar to that of the holding portion 28 shown in FIG. 19. In this case, the holding portion 28 shown in FIG. 20 has one lateral portion 58, one upper portion 60, and one downward portion 61.

The holding portion 28 shown in FIG. 20 is attached to the same support portion 29 as the support portion 29 to which the holding portion 28 shown in FIG. 11 is attached (see FIGS. 8, 9, and 10). In this case, the holding portion 28 shown in FIG. 20 is attached to the support portion 29 in the same manner as the holding portion 28 shown in FIG. 19 is attached to the support portion 29.

The holding portion 28 shown in FIG. 19 and the holding portion 28 shown in FIG. 20 are suited to holding a package that has handle portions, and such a package can be held by placing the handle portions of the package on the hook portions 59 of the holding portions 28.

As described above, support portions 29 having various specifications can be attached to and detached from the base portion 15, such as the support portion 29 having the holding portion 28 shown in FIG. 11, the support portion 29 having the holding portion 28 shown in FIG. 18, the support portion having the holding portion 28 shown in FIG. 19, and the support portion 29 having the holding portion 28 shown in FIG. 20.

### Operation of assist device

In the case where a package placed on a pallet or the floor is to be placed on a high shelf or truck bed for example, it is envisioned that the worker squats and places their hands on the package on the pallet or floor, then rises while holding the package with their hands stretched downward, then lifts the package up, and places it on the high shelf or truck bed.

The following describes the operation of the right and left leg action portions 3 and the lifting/lowering device 17 under control of the control device 8 based on operations for pressing the raising operation switch 23 and the lowering operation switch 24 in the state where a worker wearing the assist device performs the above-described operation.

As shown in FIGS. 1 and 2, when the assist device is worn by the worker, if both the raising operation switch 23 and the lowering operation switch 24 are not pressed by the worker, the electrical motor 27 of the lifting/lowering device 17 is stopped, and the electrical motors of the right and left leg action portions 3 are in the stopped state (free rotation state).

When the worker walks or bends their knees to lower their waist portion (squats), the operation arms 12 swing to follow the thigh portions of the worker, and the movement of the worker is not hindered.

Next, in the case where the worker squats and grabs the package on the pallet or floor, if the worker then presses the lowering operation switch 24, the electrical motor 27 of the lifting/lowering device 17 operates in the unwinding direction, the inner-wires 18a and 19a of the wires 18 and 19 are unwound, and the hand portions 20 descend. When the pressing of the lowering operation switch 24 stops, the electrical motor 27 stops, and the hand portions 20 stop. The worker can thus hold the package with the hand portions 20.

As previously described, an electromagnetic brake (not shown) is provided in the electrical motor 27, and the electromagnetic brake automatically engages when the electrical motor 27 is stopped or not receiving power.

Accordingly, while the electrical motor 27 is stopped, the inner-wires 18a and 19a of the wires 18 and 19 are not unwound from the lifting/lowering device 17, and the hand portions 20 do not descend even if the weight of the package is applied to the hand portions 20 as will be described later.

Next, while holding the package with the hand portions 20, the worker lifts the package by standing up. In this state, if the worker presses the raising operation switch 23, the operation arms 12 of the leg action portions 3 are driven downward, and the thigh portions of the worker are moved downward, thus assisting the standing-up of the worker. When the worker stands up in this way, the hand portions 20 do not descend due to the previously-described braking function of the electrical motor 27.

As previously described, after the worker has stood up while pressing the raising operation switch 23, if it is detected that the operation arms 12 of the leg action portions 3 have reached a position of facing substantially straight downward, it is determined that the worker has completely stood up, and the electrical motor of the leg action portions 3 is put in the stopped state (free rotation state).

Next, the electrical motor 27 of the lifting/lowering device 17 operates in the winding direction, the inner-wires 18a and 19a of the wires 18 and 19 are wound, and the hand portions 20 rise. When the hand portions 20 have risen to a desired position, by stopping the pressing of the raising operation switch 23, the electrical motor 27 stops, and the hand portions 20 stop.

Next, the worker walks to the high shelf, the truck bed, or the like on which the package is to be placed. When the worker arrives at the high shelf, the truck bed, or the like, and then presses the lowering operation switch 24, the electrical motor 27 of the lifting/lowering device 17 operates in the unwinding direction, the inner-wires 18a and 19a of the wires 18 and 19 are unwound, and the hand portions 20 descend.

Accordingly, the worker places the package on the high shelf, the truck bed, or the like, and detaches the hand portions 20 from the package. In this way, when the package is placed on the high shelf, the truck bed, or the like, the initial state is returned to, and similar operations are performed with respect to the next package.

### First variation of first embodiment

Instead of the holding portion 28 and the support portion 29 being separate members, and the holding portion 28 being attached to the support portion 29, a configuration is possible in which the holding portion 28 and the support portion 29 are integrated with each other. According to this configuration, support portions 29 having a holding portion 28 need to be prepared in accordance with packages that have different shapes.

The first stopper portion 37 and the second stopper portion 42b may be provided in the base portion 15 instead of the support portion 29.

### Second variation of first embodiment

The assist device may be provided with one arm portion 2 instead of the right and left arm portions 2.

According to this configuration, two wires 18 extend from the one arm portion 2, a right hand portion 20 is provided on one of the two wires 18, and a left hand portion 20 is provided on the other one of the two wires 18. Alternatively, one wire 18 extends from the one arm portion 2, the end portion of the wire 18 is branched into two portions, the right hand portion 20 is provided on one of the two branched portions, and the left hand portion 20 is provided on the other branched portion.

A configuration is possible in which the raising operation switch 23 is provided in the left hand portion 20, and the lowering operation switch 24 is provided in the right hand portion 20. The raising operation switch 23 and the lowering operation switch 24 may be provided in only either the right or the left hand portion 20.

The assist device may be configured without the right and left leg action portions 3.

A configuration is possible in which the lifting/lowering device 17 is omitted from the assist device, the wires 18 and 19 are coupled to the main body portion 1 and the arm portion 2, the positions of the hand portions 20 are fixed, and the hand portions 20 are not raised or lowered.

### Third variation of first embodiment

The present invention is not limited to hand portions used in an assist device that is worn by a worker and assists the holding of a package by the worker, and the present invention is also applicable to hand portions used in a winch supported to the ceiling portion of a building, for example.

### Second Embodiment

The following describes a second embodiment, which is an example of the present invention, with reference to the drawings. Note that in the following description, direction-related notations such as "up", "down", "front", "rear", "left", and "right" are based on the viewpoint of a worker who is wearing an assist suit.

### Basic configuration of assist suit

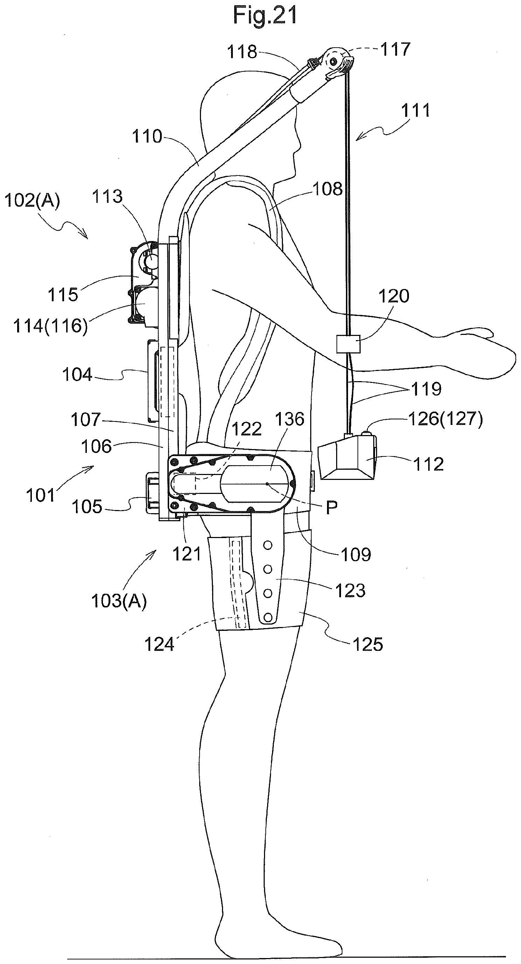

An assist suit shown in FIGS. 21 to 23 and the like is worn on a worker's body, and can provide assist power for assisting the lifting and lowering of a target object (load) by the worker.

As shown in FIGS. 21 to 23, the assist suit includes a main body portion 101 that is attached to the back portion (mid back portion) side of a worker and is supported by the worker's body, driving devices A that can assist movement performed by the worker, a control device 104 that controls the driving devices A, a battery 105 that can supply power to an electrical system for the driving devices A, and the like.

As shown in FIGS. 21 to 23, the driving devices A include an arm assist device 102 that supplements the muscular strength of arm portions of the worker in order to assist movement for changing the height position of a load, which is one example of a target object, and a waist assist device 103 that supplements the muscular strength of the waist portion and leg portions of the worker in order to assist movement for bending or extending the leg portions.

As shown in FIGS. 21 to 23, the main body portion 101 is obtained by assembling multiple members into a frame shape. More specifically, the main body portion 101 includes a pair of left and right vertical frames 106, a vertical plate-shaped support frame 107 that couples the left and right vertical frames 106 to each other, and the like. The arm assist device 102, the waist assist device 103, the control device 104, and the battery 105 are supported to the main body portion 101.

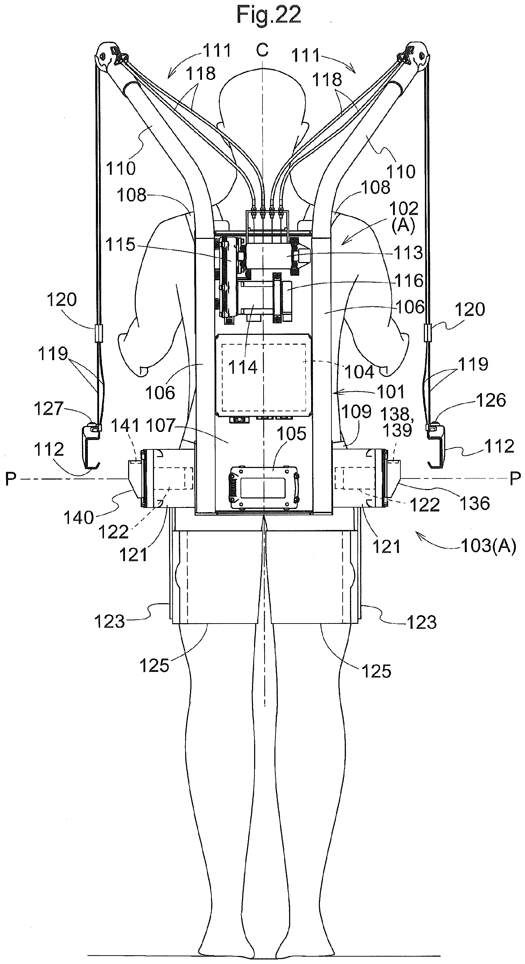

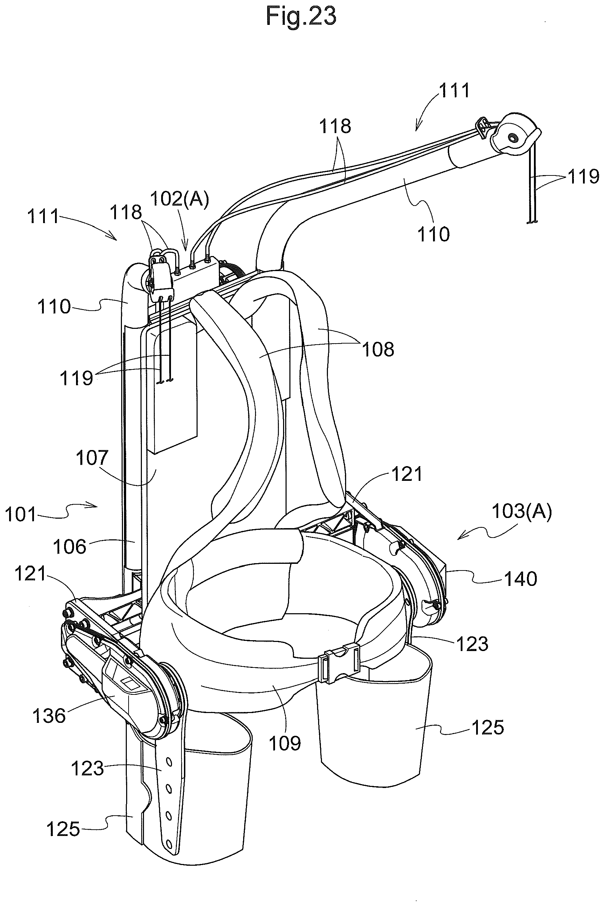

As shown in FIGS. 21, 23, and the like, left and right shoulder belts 108 and a waist belt 109 are provided on the front surface side of the support frame 107. The worker attaches the main body portion 101 to their body by passing their arms through the corresponding left and right shoulder belts 108 and placing such belts on their shoulder portions, and wrapping the waist belt 109 around their waist portion. Accordingly, as shown in FIGS. 21 and 22, the worker can wear the assist suit in a manner in which the main body portion 101 is carried on their back portion side.

### Arm assist device

As shown in FIGS. 21, 22, and the like, the arm assist device 102 can suspend a load and assist an operation of lifting the load. The arm assist device 102 is a winch-type of device that can suspend the load. The arm assist device 102 includes left and right arm portions 110 that determine the suspension fulcrum of a load, two left and right suspension cord-like bodies 111 for suspending a load, left and right hand portions 112 for holding a load, a reel mechanism 113 for winding and unwinding the suspension cord-like bodies 111, a lifting/lowering motor 114 that drives the reel mechanism 113 to rotate, a transmission mechanism 115 for changing the speed of drive power that is transmitted from the lifting/lowering motor 114 to the reel mechanism 113, an electromagnetic brake 116 that can provide braking force to the reel mechanism 113, and the like.

As shown in FIGS. 21, 22, and the like, the left and right arm portions 110 respectively extend forward and upward from upper end portions of the left and right vertical frames 106 of the main body portion 101. As shown in FIG. 21, the left and right arm portions 110 pass along the sides of the head portion of the worker, and extend to position that are above and forward of the head portion of the worker. As shown in FIG. 22, the left and right arm portions 110 are provided such that the distance of separation therebetween increases as they extend forward. As shown in FIG. 21, the upper end portion (front end portion) of each of the left and right arm portions 110 is provided with a rotating pulley 117.

As shown in FIGS. 21, 22, and the like, the suspension cord-like bodies 111 each include a tubular outer wire 118 and an inner wire 119 that is partially covered by the outer wire 118. The inner wires 119 each have one end portion that is fixed to the reel mechanism 113, an intermediate portion that is placed on the pulley 117 of the corresponding arm portion 110, and an other end portion that is attached to the corresponding hand portion 112. The outer wires 118 cover portions of the corresponding inner wires 119 from the vicinity of the reel mechanism 113 to the vicinity of the pulleys 117 of the arm portions 110.

As shown in FIG. 22, the left and right hand portions 112 are bilaterally symmetrical with each other. The left and right hand portions 112 can support a load by being placed on handle portions of the load, for example. The left and right hand portions 112 are respectively suspended by the two inner wires 119. For each of the hand portions 112, one of the two inner wires 119 is for supporting the weight of the load that is engaged with the hand portion 112. The remaining inner wire 119 is usually not in a tense state, and is used to prevent the dropping of the load by supporting the weight of the load if the a problem occurs with the other inner wire 119 that is supporting the load.

As shown in FIGS. 21 and 22, a stopper 120 for restricting excessive winding of the inner wires 119 is provided above each of the left and right hand portions 112.

The lifting/lowering motor 114 shown in FIGS. 21, 22, and 26 is an electrical motor, and is driven using electrical power received from the battery 105, in accordance with instructions from the control device 104. Drive power from the lifting/lowering motor 114 is subjected to speed-change (deceleration) by the transmission mechanism 115, and the reel mechanism 113 is driven to rotate with the resulting drive power. When the reel mechanism 113 is driven to rotate, the inner wires 119 are wound or unwound, thus raising or lowering the left and right hand portions 112 that are supporting a load.

The electromagnetic brake 116 shown in FIGS. 21, 22, and 26 is configured as a so-called negative brake that generates braking force when power is not supplied thereto. More specifically, when not receiving electrical power from the battery 105, the electromagnetic brake 116 generates braking force so as to prevent rotation of the reel mechanism 113 and prevent the raising/lowering of the left and right hand portions 112, and when receiving electrical power from the battery 105, the electromagnetic brake 116 stops generating braking force so as to allow rotation of the reel mechanism 113 and enable the raising/lowering of the left and right hand portions 112.

As shown in FIG. 22, the reel mechanism 113, the lifting/lowering motor 114, the transmission mechanism 115, and the electromagnetic brake 116 are attached in the vicinity of each other on the rear surface of an upper portion of the support frame 107. The control device 104 is attached to the rear surface of an intermediate portion of the support frame 107 that is below the parts pertaining to the arm assist device 102. The battery 105 is attached to the rear surface of a lower portion of the support frame 107 that is located below the control device 104.

The arm assist device 102 provides assistance between an upper limit height and a lower limit height that are set regarding heights of the hand portions 112 (load). In other words, the arm assist device 102 provides assistance in a height range set regarding heights of the hand portions 112 (load). Basically, when not providing assistance, through the action of the electromagnetic brake 116, the arm assist device 102 holds the state of the reel mechanism 113 so as to maintain the height of the hand portions 112 (load).

### Waist assist device

The waist assist device 103 shown in FIGS. 21 to 23 and the like can assist stand-up movement and the like of the worker. The waist assist device 103 includes a pair of left and right base portion cases 121, left and right leg motors 122, leg arms 123 that are attached to front end portions of the base portion cases 121 so as to be capable of swinging about a horizontal axis P that extends in the left-right direction, leg belts 125 that are attached to the leg arms 123 and each have a hook-and-loop fastener 124, and the like.

As shown in FIG. 23, the base portion cases 121 are each approximately L-shaped in a view from above. As shown in FIG. 22, the left and right base portion cases 121 are approximately bilaterally symmetrical with each other. As shown in FIGS. 21, 22, and 26, the base portion cases 121 house therein the leg motors 122 for driving the leg arms 123, and drive mechanisms for decelerating drive power that is transmitted from the leg motors 122 to the leg arms 123. As shown in FIG. 21, the left and right leg belts 125 are attached to leg portions of the worker by being wrapped around thigh portions of the worker and then engaging portions of the hook-and-loop fasteners 124. The leg arms 123 can be swung relative to the base portion cases 121 by driving the corresponding left and right leg motors 122. Drive force from the leg motors 122 is transmitted to the thigh portions of the worker via the corresponding leg arms 123 and leg belts 125.

The left and right leg motors 122 are both an electrical motor constituted by a servomotor or the like. The left and right leg motors 122 are each driven with use of electrical power supplied by the battery 105, in accordance with instructions from the control device 104.

The waist assist device 103 performs assistance between an upper limit angle and a lower limit angle that are set regarding the arm angles of the leg arms 123 (the angle of the leg arms 123 relative to the base portion cases 121). In other words, the waist assist device 103 provides assistance in an angle range that is set regarding the arm angles of the leg arms 123. The leg arms 123 can swing while the waist assist device 103 is not providing assistance.

### Raising switch and lowering switch

As shown in FIGS. 21 and 22, out of the left and right hand portions 112, the hand portion 112 on one side (right side) is provided with a raising switch 126, and the hand portion 112 on the other side (left side) is provided with a lowering switch 127. The raising switch 126 and the lowering switch 127 are connected to the control device 104. The raising switch 126 is operated when the load is to be lifted, and the lowering switch 127 is operated when the load is to be lowered. The arm assist device 102 and the waist assist device 103 are driven in coordination based on operations performed on the raising switch 126 or the lowering switch 127. Note that if the raising switch 126 and the lowering switch 127 are both operated at the same time, the operations performed on the raising switch 126 and the lowering switch 127 are both invalidated.

### Modes

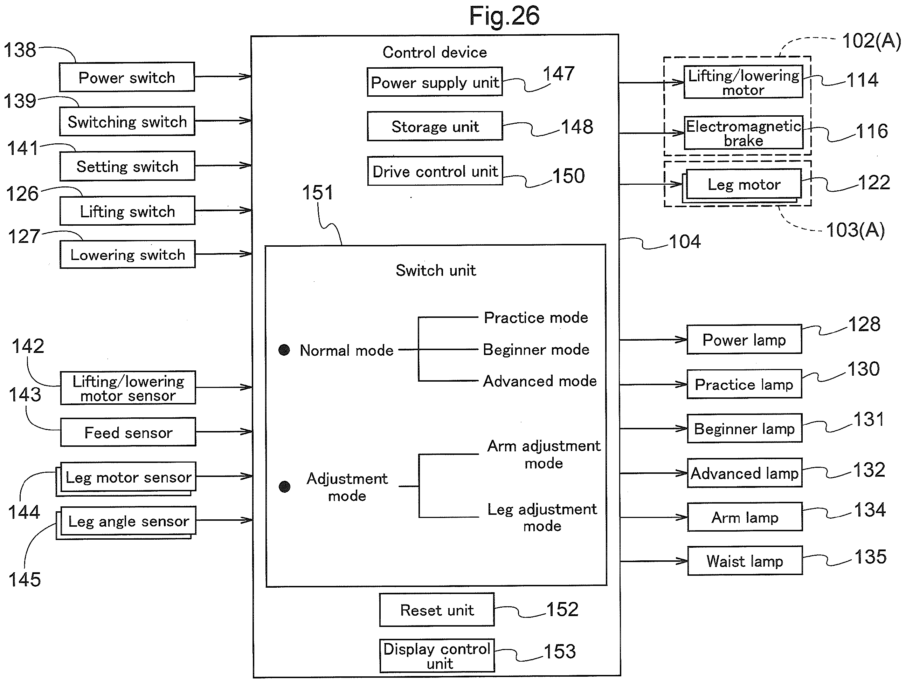

As shown in FIG. 26, the assist suit can be switched between a normal mode in which the assist suit can assist worker movement, and an adjustment mode in which assist characteristics for use in the normal mode can be adjusted. Parameters defining the assist characteristic pertaining to the arm assist device 102 include the upper limit height and the lower limit height of the height range for suspension positions of the target object when the arm assist device 102 provides assist power. Also, parameters defining the assist characteristic pertaining to the waist assist device 103 include the upper limit angle and the lower limit angle of the angle range when the waist assist device 103 provides assist power.

The normal mode includes a practice mode (first normal mode), a beginner mode (second normal mode), and an advanced mode (third normal mode). Among these types of normal modes, the assistance provided by the driving devices A is weakest (the assist torque is small, and the assist speed is slow) in the practice mode, and the assistance provided by the driving devices A is increasingly stronger in the order of the practice mode, the beginner mode, and the advanced mode.

The adjustment mode include an arm adjustment mode in which the assist range of the arm assist device 102 can be adjusted, and a waist adjustment mode in which the assist range of the waist assist device 103 can be adjusted. In the arm adjustment mode, at least either the upper limit height or the lower limit height can be changed. In the waist adjustment mode, at least either the upper limit angle or the lower limit angle can be changed.

### Left and right switch cases

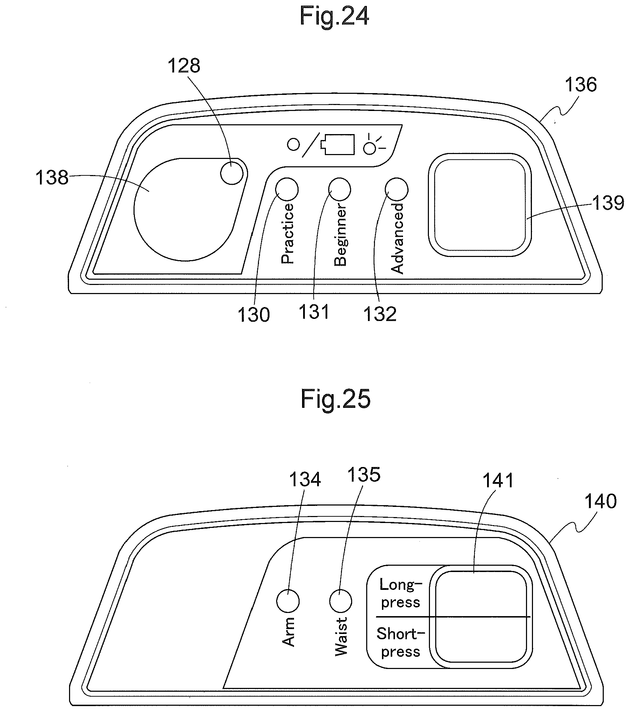

As shown in FIGS. 21, 22, and 24, a right switch case 136 is provided on the right outward side of the right base portion case 121. As shown in FIGS. 22 and 24, a left switch case 140 is provided on the left outward side of the left base portion case 121. The left switch case 140 and the right switch case 136 are arranged on the left and right sides, and are centered about the main body portion 101.

As shown in FIG. 24, the upper surface side of the right switch case 136 is provided with a push-type power switch 138, a push-type switching switch 139 (corresponding to a "reset switch"), a power lamp 128 that indicates the power state, a practice lamp 130 that indicates the practice mode, a beginner lamp 131 that indicates the beginner mode, and an advanced lamp 132 that indicates the advanced mode.

As shown in FIG. 25, the upper surface side of the left switch case 140 is provided with a push-type setting switch 141, an arm lamp 134 that indicates the arm adjustment mode, and a waist lamp 135 that indicates the waist adjustment mode.

### Switching switch and setting switch

In the normal mode, the switching switch 139 can be short-pressed to switch from one type of normal mode to another type of normal mode having a different assist effect. Specifically, each time the switching switch 139 is short-pressed, the normal mode successively switches between the practice mode, the beginner mode, and the advanced mode in this order. In other words, in the normal mode, the switching switch 139 functions as a manual operation switch for switching the strength of the assist effect of the driving devices A.

On the other hand, in the adjustment mode, an assist characteristic setting can be reset by operating the switching switch 139. Specifically, in the adjustment mode, by long-pressing the switching switch 139 for a longer time than a short-press, it is possible to manually reset an assist characteristic setting that was set with use of the setting switch 141. More specifically, in the adjustment mode, when the switching switch 139 is long-pressed, an assist characteristic setting pertaining to the waist assist device 103 that is one of the driving devices A and an assist characteristic setting pertaining to the arm assist device 102 that is one of the driving devices A are both reset together. Here, in the adjustment mode, when the switching switch 139 is long-pressed, the assist characteristics of the driving devices A are reset to pre-set standard values. The standard values can be set as appropriate values according to conditions such as often-used work modes, in accordance with the desires of the rental company, such as a leasing company, for example.

In the normal mode, it is possible to switch from the normal mode to the adjustment mode by short-pressing the setting switch 141. Specifically, the setting switch 141 is a switch that enables switching to an adjustment mode for adjusting an assist characteristic by being short-pressed. Also, in the adjustment mode, it is possible to switch between the arm adjustment mode and the waist adjustment mode by short-pressing setting switch 141.

Specifically, in the normal mode, it is possible to switch from the normal mode to the arm adjustment mode by short-pressing the setting switch 141. Also, in the arm adjustment mode, it is possible to switch from the arm adjustment mode to the waist adjustment mode by short-pressing the setting switch 141. Furthermore, in the waist adjustment mode, it is possible to switch from the waist adjustment mode to the normal mode by short-pressing the setting switch 141.

Also, in the arm adjustment mode, if the setting switch 141 is long-pressed for a longer time than a short-press, it is possible to accept a new setting regarding an assist characteristic (height range) of the arm assist device 102. In this state, the electromagnetic brake 116 does not generate braking force, and the inner wires 119 can be unwound freely. When the hand portions 112 (load) are placed at a desired height, and then setting switch 141 is long-pressed once again, a new upper limit height or a new lower limit height is set for the arm assist device 102 in correspondence with the height of the hand portions 112 (load). Accordingly, an assist characteristic (height range) of the arm assist device 102 can be changed in accordance with the worker's preference.

Also, in the waist adjustment mode, if the setting switch 141 is long-pressed for a longer time than a short-press, it is possible to accept a new setting regarding an assist characteristic (angle range) of the waist assist device 103. In this state, when the leg arms 123 are set at a desired arm angle, and then setting switch 141 is long-pressed once again, a new upper limit angle or a new lower limit angle is set for the waist assist device 103 in correspondence with the arm angles of the leg arms 123. Accordingly, an assist characteristic (angle range) of the waist assist device 103 can be changed in accordance with the worker's preference.

In this way, the setting switch 141 is a switch that enables manually setting assist characteristics of the driving devices A.

As shown in FIG. 22, the switching switch 139 is arranged at a position biased to one side (right side) of a left-right center C of the main body portion 101. Also, the setting switch 141 is arranged at a position biased to the other side (left side) of the left-right center C of the main body portion 101. In other words, the switching switch 139 and the setting switch 141 are arranged on opposite sides of the left-right center C of the main body portion 101.

As shown in FIG. 26, the assist suit includes sensors such as a lifting/lowering motor sensor 142 that detects the rotation speed of the lifting/lowering motor 114, a feed sensor 143 that detects the feed amount of the inner wires 119 based on the rotation speed of the reel mechanism 113, leg motor sensors 144 that detect the rotation speeds of the leg motors 122, and leg angle sensors 145 that detect the arm angles of the leg arms 123.

The leg motor sensors 144 and the lifting/lowering motor sensor 142 are each constituted by a rotary encoder or the like. Also, the leg angle sensors 145 and the feed sensor 143 are each constituted by a potentiometer or the like. As shown in FIG. 26, output signals from the lifting/lowering motor sensor 142, the feed sensor 143, the leg motor sensors 144, and the leg angle sensors 145 are input to the control device 104.

### Control configuration

As shown in FIG. 26, the control device 104 includes a power supply unit 147 that controls the supply of power from the battery 105, a storage unit 148 that stores assist characteristics set for various types of normal modes and information that is based on sensor detection results and the like, a drive control unit 150 that controls the driving of the driving devices A, a switch unit 151 that can perform switching between modes, a reset unit 152 that can reset the assist characteristics set for various modes, a display control unit 153 that controls displays given using various lamps, and the like.

Based on an operation performed on the power switch 138, the power supply unit 147 can switch between an on mode in which electrical power can be supplied from the battery 105 to various elements, and an off mode in which electrical power is not supplied from the battery 105 to various elements.

The drive control unit 150 controls the driving of the lifting/lowering motor 114 and the electromagnetic brake 116 of the arm assist device 102 and the leg motors 122 of the waist assist device 103 with use of electrical power from the battery 105, based on parameters stored in the storage unit 148 for the selected normal mode, and based on input operations performed on the raising switch 126 and the lowering switch 127.

Based on an input operation performed on the switching switch 139, the switch unit 151 can selectively switch between the types of normal modes for providing an assist effect, namely the practice mode, the beginner mode, and the advanced mode. Also, based on an operation performed on the setting switch 141, the switch unit 151 can switch between the normal mode for providing an assist effect and the adjustment mode for adjusting assist characteristics of the driving devices A.

In accordance with long-pressing of the switching switch 139 in the adjustment mode, the reset unit 152 resets all of the assist characteristics of the driving devices A (arm assist device 102 and waist assist device 103) that are stored in the storage unit 148 for all of the types of normal modes, that is to say resets the assist characteristics to respective standard values.

The display control unit 153 controls the display states of lamps such as the power lamp 128, the practice lamp 130, the beginner lamp 131, the advanced lamp 132, the arm lamp 134, and the waist lamp 135 based on information received from the power supply unit 147, the switch unit 151, and the like.

### Basic operation aspects of assist suit

The following describes basic operation aspects of the assist suit having the above-described structure.

When a load placed on the ground or floor is to be picked up and moved to a high location for example, first, the lowering switch 127 is pressed for a certain duration. Accordingly, the inner wires 119 are fed from the reel mechanism 113 of the arm assist device 102 such that the left and right hand portions 112 are lowered, and then when the left and right hand portions 112 have been lowered to a certain extent, the leg arms 123 of the waist assist device 103 are driven in a direction for knee bending in order to assist the worker when squatting. The left and right hand portions 112 are hooked onto the load, and then the raising switch 126 is pressed for a certain duration. Accordingly, the inner wires 119 are wound by the reel mechanism 113 of the arm assist device 102 such that the left and right hand portions 112 supporting the load are raised, and the leg arms 123 of the waist assist device 103 are driven in a direction for knee extending in order to assist the worker when standing up. Accordingly, the arm assist device 102 supplements the arm muscular strength of the worker, and the waist assist device 103 supplements the leg/waist muscular strength of the worker, thus making it possible to easily lift the load.

When the raising switch 126 stops being pressed and the lifting of the hand portions 112 stops, the electromagnetic brake 116 generates braking force, and the left and right hand portions 112 supporting the load are maintained at a desired height. When the assistance provided by the waist assist device 103 is complete, the leg arms 123 enter a swingable state. The standing-up assistance provided by the waist assist device 103 ends before the left and right hand portions 112 of the arm assist device 102 have been lifted to the upper limit position, and therefore the left and right hand portions 112 supporting the load are maintained at the desired height, and the worker can freely walk and move the load to a predetermined location without using much arm muscular strength.

When the load is to be placed at the predetermined location, the lowering switch 127 is pressed for a certain duration. Accordingly, the inner wires 119 are fed out from the reel mechanism 113 of the arm assist device 102, and the left and right hand portions 112 supporting the load are lowered. If the load is to be placed at a low height, the waist assist device 103 is also driven in order to assist the worker when squatting. When the load has been placed at the predetermined location, the load moving operation is complete.

### Adjustment mode

As described above, the adjustment mode shown in FIG. 26 includes the arm adjustment mode that enables adjusting the assist range of the arm assist device 102, and the waist adjustment mode that enables adjusting the assist range of the waist assist device 103.

In the arm adjustment mode, if the setting switch 141 is long-pressed (an operation in which the pressing time is longer than that in a short-press), an adjustment of the assist range of the arm assist device 102 can be accepted. In this state, the electromagnetic brake 116 of the lifting/lowering motor 114 does not generate braking force, and the lifting/lowering motor 114 generates a small amount of torque for winding the inner wires 119.

When the height of the hand portions 112 located at the leading ends of the inner wires 119 are set to a desired height and then the setting switch 141 is long-pressed once again, the feed amount of the inner wires 119 corresponding to the height of the hand portions 112 at that time is set as a limit value. A value indicating the feed position of the inner wires 119 (the height of the hand portions 112 supporting the load) at the time when the setting switch 141 is long-pressed once again is automatically determined to be the upper limit or the lower limit based on proximity to mechanical upper limit of the feeding of the inner wires 119 and the mechanical lower limit of the winding of the inner wires 119. Specifically, if the value indicating the feed position of the inner wires 119 at the time when the setting switch 141 is long-pressed is closer to the mechanical upper limit, that feed position of the inner wires 119 is set as the new upper limit value (upper limit height). On the other hand, if the value indicating the feed position of the inner wires 119 at the time when the setting switch 141 is long-pressed is closer to the mechanical lower limit, that feed position of the inner wires 119 is set as the new lower limit value (lower limit height). Note that a dead zone having a predetermined width is set at the center between the mechanical upper limit and the mechanical lower limit, and if the value indicating the feed position of the inner wires 119 at the time when the setting switch 141 is long-pressed is in the dead zone, that value is not set as the new upper limit value or lower limit value. In this way, the height range of the arm assist device 102 can be set in accordance with the physique or the preference of the worker wearing the assist suit.

In the waist adjustment mode, if the setting switch 141 is long-pressed, an adjustment of the angle range of the waist assist device 103 can be accepted. When the arm angle of the leg arms 123 is set to a desired angle and then the setting switch 141 is long-pressed once again, the arm angle of the leg arms 123 at that time is set as a limit value. A value indicating the arm angle of the leg arms 123 at the time when the setting switch 141 is long-pressed once again is automatically determined to be the upper limit or the lower limit based on proximity to mechanical upper limit of the raising of the leg arms 123 and the mechanical lower limit of the lowering of the leg arms 123. Specifically, if the value indicating the arm angle of the leg arms 123 at the time when the setting switch 141 is long-pressed is closer to the mechanical upper limit, that arm angle of the leg arms 123 is set as the new upper limit value (upper limit angle). On the other hand, if the value indicating the arm angle of the leg arms 123 at the time when the setting switch 141 is long-pressed is closer to the mechanical lower limit, that arm angle of the leg arms 123 is set as the new lower limit value. Note that a dead zone having a predetermined width is set at the center between the mechanical upper limit and the mechanical lower limit, and if the value indicating the arm angle of the leg arms 123 at the time when the setting switch 141 is long-pressed is in the dead zone, that value is not set as the new upper limit value or lower limit value. In this way, the angle range of the waist assist device 103 can be set in accordance with the physique or the preference of the worker wearing the assist suit.

The adjustment mode (arm adjustment mode, waist adjustment mode) is provided separately for each type of normal mode, namely the practice mode, the beginner mode, and the advanced mode.

### Assist characteristic reset operation

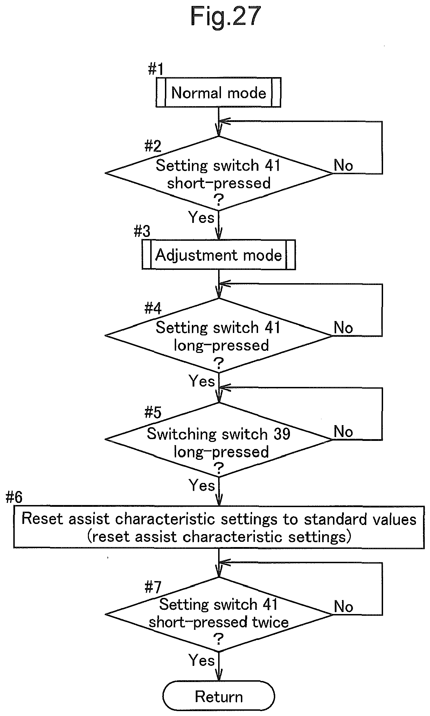

The following describes an example of operations for resetting the assist characteristics with reference to FIG. 27.

As shown in FIG. 27, when the power switch 138 is manually operated to set to the power supply unit 147 to the ON state, first, the normal mode having the weakest assist effect, that is to say the practice mode, is set (#1). Next, if the setting switch 141 is short-pressed (#2: YES), the adjustment mode (arm adjustment mode) is set (#3). Next, if the setting switch 141 is long-pressed, a new assist characteristic setting can be accepted (#4: YES). If the switching switch 139 is long-pressed in this state (#5: YES), the assist characteristics pertaining to the driving devices A are all reset to standard values (#6). Next, if the setting switch 141 is short-pressed twice (#7: YES), the processing returns, and the mode is returned to the normal mode.

Here, in step #5, the assist characteristics pertaining to the driving devices A, namely the height range (upper limit height and lower limit height) of the arm assist device 102 and the angle range (upper limit angle and lower limit angle) of the waist assist device 103 for all types of normal modes (practice mode, beginner mode, and advanced mode), are all reset together to standard values.

### Other aspects of second embodiment

The following describes other aspects that can be combined with the second embodiment. Two or more of the following other aspects can be combined with the second embodiment as long as no contradiction arises. Note that the scope of the present invention is not intended to be limited to the content illustrated in the following aspects.
(1) In the second embodiment, an example is illustrated in which the switching switch 139 and the setting switch 141 are arranged on opposite sides of the left-right center C of the main body portion 101, but there is no limitation to this. For example, the switching switch 139 and the setting switch 141 may be arranged on the same side of the left-right center C of the main body portion 101.
(2) In the second embodiment, an example is illustrated in which when the switching switch 139 is long-pressed in the adjustment mode, the assist characteristic settings pertaining to the waist assist device 103 and the assist characteristic settings pertaining to the arm assist device 102 are both reset together, but there is no limitation to this. For example, a configuration is possible in which when the switching switch 139 is operated in the adjustment mode, only the assist characteristic of the driving device A that corresponds to the currently selected type of adjustment mode (arm adjustment mode or waist adjustment mode) is reset. For example, in this case, if the switching switch 139 in the arm adjustment mode, only the assist characteristic setting pertaining to the arm assist device 102 is reset, and the assist characteristic setting pertaining to the waist assist device 103 is not reset.
(3) In the second embodiment, an example is illustrated in which the upper limit angle and the lower limit angle of the angle range of assist power generated by the waist assist device 103 are included as parameters that define the assist characteristic pertaining to the waist assist device 103, but there is no limitation to this. For example, a configuration is possible in which only the upper limit angle or the lower limit angle of the angle range of assist power generated by the waist assist device 103 is included as a parameter that defines the assist characteristic pertaining to the waist assist device 103. In other words, it is sufficient that at least one of the upper limit angle and the lower limit angle of the angle range of assist power generated by the waist assist device 103 is included as a parameter that defines the assist characteristic pertaining to the waist assist device 103.
(4) In the second embodiment, an example is illustrated in which the upper limit height and the lower limit height of the load suspension position height range of assist power generated by the arm assist device 102 are included as parameters that define the assist characteristic pertaining to the arm assist device 102, but there is no limitation to this. For example, a configuration is possible in which only the upper limit height or the lower limit height of the load suspension position height range of assist power generated by the arm assist device 102 is included as a parameter that defines the assist characteristic pertaining to the arm assist device 102. In other words, it is sufficient that at least one of the upper limit height and the lower limit height of the load suspension position height range of assist power generated by the arm assist device 102 is included as a parameter that defines the assist characteristic pertaining to the arm assist device 102.
(5) In the second embodiment, an example is illustrated in which the state for accepting a new assist characteristic setting is entered when the setting switch 141 is long-pressed, but there is no limitation to this. For example, the state for accepting a new assist characteristic setting may be entered when the setting switch 141 is short-pressed
(6) In the second embodiment, an example is illustrated in which the assist characteristic settings are reset to standard values when the switching switch 139 is long-pressed in the adjustment mode, but there is no limitation to this. For example, the assist characteristic settings may be returned to immediately previous settings (i.e., may be undone) when the switching switch 139 is long-pressed in the adjustment mode.
(7) In the second embodiment, an example is illustrated in which the height range setting can be reset as the assist characteristic of the arm assist device 102, but there is no limitation to this. For example, another element setting such as the assist torque or the assist speed may be able to be reset as the assist characteristic of the arm assist device 102.
(8) In the second embodiment, an example is illustrated in which the angle range setting can be reset as the assist characteristic of the waist assist device 103, but there is no limitation to this. For example, another element setting such as the assist torque or the assist speed may be able to be reset as the assist characteristic of the waist assist device 103.
(9) In the second embodiment, an example is illustrated in which the waist assist device 103 and the arm assist device 102 are provided as two types of driving devices A, but there is no limitation to this. For example, a configuration is possible in which only the waist assist device 103 or the arm assist device 102 is provided as the driving device A.
(10) Although a load is illustrated as an example of the target object in the second embodiment, there is no limitation to this. For example, the target object may be an agricultural product planted in a field. In this case, the agricultural product can be pulled from the field and lifted up with assistance from the arm assist device 102.
(11) The structure may be inverted in the left-right direction in the second embodiment.
(12) The present invention is applicable to an assist suit that can assist target object lifting and lowering movements made by a worker.

### Third Embodiment

The following describes a third embodiment, which is an example of the present invention, with reference to the drawings. Note that in the following description, direction-related notations such as "up", "down", "front", "rear", "left", and "right" are based on the viewpoint of a worker who is wearing an assist suit.

### Basic configuration of assist suit

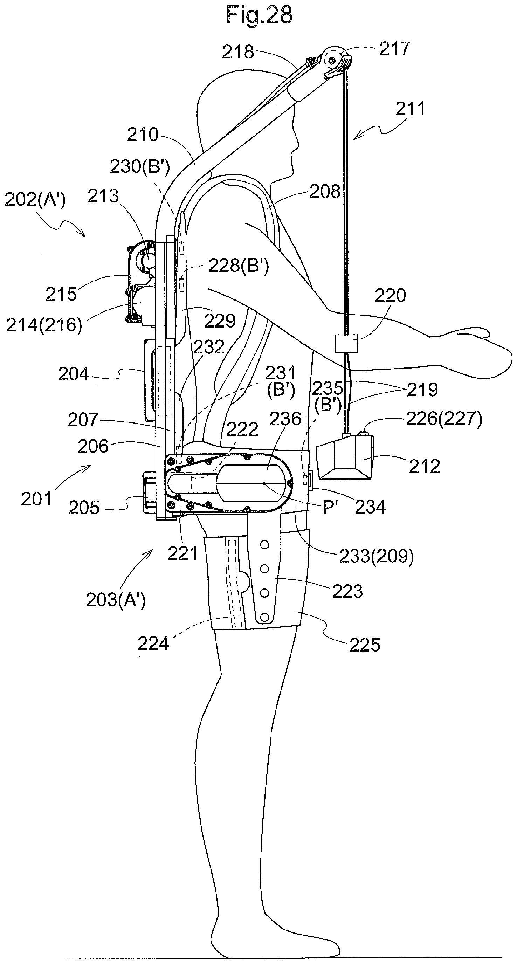

An assist suit shown in FIGS. 28 to 30 and the like is worn on a worker's body, and can provide assist power for assisting the lifting and lowering of a target object (load) by the worker.

As shown in FIGS. 28 to 30, the assist suit includes a main body portion 201 that is attached to the back portion (mid back portion) side of a worker and is supported by the worker's body, driving devices A' that can assist movement performed by the worker, a control device 204 that controls the driving devices A', a battery 205 that can supply power to an electrical system for the driving devices A', and the like.

As shown in FIGS. 28 to 30, the driving devices A' include an arm assist device 202 that supplements the muscular strength of arm portions of the worker in order to assist movement for changing the height position of a load, which is one example of a target object, and a waist assist device 203 that supplements the muscular strength of the waist portion and leg portions of the worker in order to assist movement for bending or extending the leg portions.

As shown in FIGS. 28 to 30, the main body portion 201 is obtained by assembling multiple members into a frame shape. More specifically, the main body portion 201 includes a pair of left and right vertical frames 206, a vertical plate-shaped support frame 207 that couples the left and right vertical frames 206 to each other, and the like. The arm assist device 202, the waist assist device 203, the control device 204, and the battery 205 are supported to the main body portion 201.

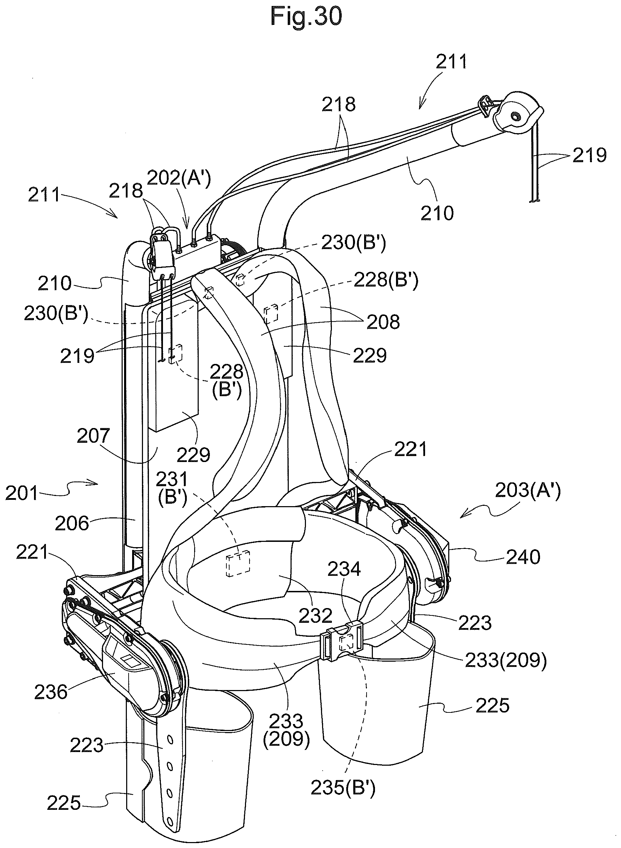

As shown in FIGS. 28, 30, and the like, the front surface side of the support frame 207 is provided with left and right shoulder belts 208 that are to be placed on the worker's shoulders and a waist belt 209 that is to be wrapped around the worker's waist. The waist belt 209 can be wrapped around and attached to the worker's waist by engaging a pair of belt portions 233 with each other. Leading end portions of the pair of belt portions 233 can be switched between an engaged state and a disengaged state by a coupling buckle portion 234.

As shown in FIGS. 28 and 30, the assist suit includes back pads 229 that come into contact with the worker's back portion when the assist suit is worn. Two back pads 229 are provided on the front surface side of an upper portion of the support frame 207. The back pads 229 are constituted by a soft material.

As shown in FIGS. 28, 30, and the like, the assist suit includes a waist pad 232 that comes into contact with the worker's waist portion when the assist suit is worn. The waist pad 232 is provided on the front surface side of a lower portion of the support frame 207. The waist pad 232 is constituted by a soft material.

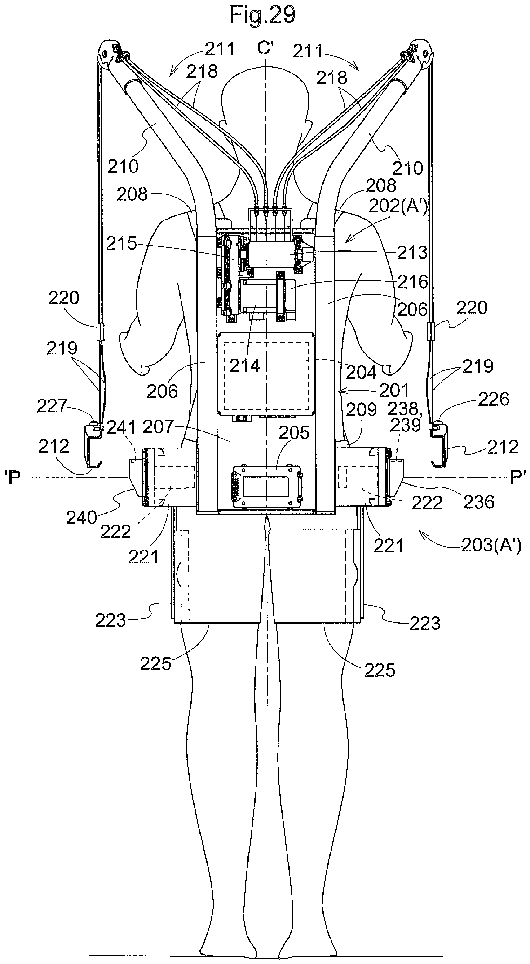

The worker attaches the main body portion 201 to their body by passing their arms through the corresponding left and right shoulder belts 208 and placing such belts on their shoulder portions, and wrapping the waist belt 209 around their waist portion. Accordingly, as shown in FIGS. 28 and 29, the worker can wear the assist suit in a manner in which the main body portion 201 is carried on their back portion side.

### Arm assist device

As shown in FIGS. 28, 29, and the like, the arm assist device 202 can suspend a load and assist an operation of lifting the load. The arm assist device 202 is a winch-type of device that can suspend the load. The arm assist device 202 includes left and right arm portions 210 that determine the suspension fulcrum of a load, two left and right suspension cord-like bodies 211 for suspending a load, left and right hand portions 212 for holding a load, a reel mechanism 213 for winding and unwinding the suspension cord-like bodies 211, a lifting/lowering motor 214 that drives the reel mechanism 213 to rotate, a transmission mechanism 215 for changing the speed of drive power that is transmitted from the lifting/lowering motor 214 to the reel mechanism 213, an electromagnetic brake 216 that can provide braking force to the reel mechanism 213, and the like.

As shown in FIGS. 28, 29, and the like, the left and right arm portions 210 respectively extend forward and upward from upper end portions of the left and right vertical frames 206 of the main body portion 201. As shown in FIG. 28, the left and right arm portions 210 pass along the sides of the head portion of the worker, and extend to position that are above and forward of the head portion of the worker. As shown in FIG. 29, the left and right arm portions 210 are provided such that the distance of separation therebetween increases as they extend forward. As shown in FIG. 28, the upper end portion (front end portion) of each of the left and right arm portions 210 is provided with a rotating pulley 217.

As shown in FIGS. 28, 29, and the like, the suspension cord-like bodies 211 each include a tubular outer wire 218 and an inner wire 219 that is partially covered by the outer wire 218. The inner wires 219 each have one end portion that is fixed to the reel mechanism 213, an intermediate portion that is placed on the pulley 217 of the corresponding arm portion 210, and an other end portion that is attached to the corresponding hand portion 212. The outer wires 218 cover portions of the corresponding inner wires 219 from the vicinity of the reel mechanism 213 to the vicinity of the pulleys 217 of the arm portions 210.

As shown in FIG. 29, the left and right hand portions 212 are bilaterally symmetrical with each other. The left and right hand portions 212 can support a load by being placed on handle portions of the load, for example. The left and right hand portions 212 are respectively suspended by the two inner wires 219. For each of the hand portions 212, one of the two inner wires 219 is for supporting the weight of the load that is engaged with the hand portion 212. The remaining inner wire 219 is usually not in a tense state, and is used to prevent the dropping of the load by supporting the weight of the load if the a problem occurs with the other inner wire 219 that is supporting the load.

As shown in FIGS. 28 and 29, a stopper 220 for restricting excessive winding of the inner wires 219 is provided above each of the left and right hand portions 212.

The lifting/lowering motor 214 shown in FIGS. 28, 29, and 31 is an electrical motor, and is driven using electrical power received from the battery 205, in accordance with instructions from the control device 204. Drive power from the lifting/lowering motor 214 is subjected to speed-change (deceleration) by the transmission mechanism 215, and the reel mechanism 213 is driven to rotate with the resulting drive power. When the reel mechanism 213 is driven to rotate, the inner wires 219 are wound or unwound, thus raising or lowering the left and right hand portions 212 that are supporting a load.

The electromagnetic brake 216 shown in FIGS. 28, 29, and 31 is configured as a so-called negative brake that generates braking force when power is not supplied thereto. More specifically, when not receiving electrical power from the battery 205, the electromagnetic brake 216 generates braking force so as to prevent rotation of the reel mechanism 213 and prevent the raising/lowering of the left and right hand portions 212, and when receiving electrical power from the battery 205, the electromagnetic brake 216 stops generating braking force so as to allow rotation of the reel mechanism 213 and enable the raising/lowering of the left and right hand portions 212.

As shown in FIG. 29, the reel mechanism 213, the lifting/lowering motor 214, the transmission mechanism 215, and the electromagnetic brake 216 are attached in the vicinity of each other on the rear surface of an upper portion of the support frame 207. The control device 204 is attached to the rear surface of an intermediate portion of the support frame 207 that is below the parts pertaining to the arm assist device 202. The battery 205 is attached to the rear surface of a lower portion of the support frame 207 that is located below the control device 204.

The arm assist device 202 provides assistance between an upper limit height and a lower limit height that are set regarding heights of the hand portions 212 (load). In other words, the arm assist device 202 provides assistance in a height range set regarding heights of the hand portions 212 (load). Basically, when not providing assistance, through the action of the electromagnetic brake 216, the arm assist device 202 holds the state of the reel mechanism 213 so as to maintain the height of the hand portions 212 (load).

### Waist assist device

The waist assist device 203 shown in FIGS. 28 to 30 and the like can assist stand-up movement and the like of the worker. The waist assist device 203 includes a pair of left and right base portion cases 221, left and right leg motors 222, leg arms 223 that are attached to front end portions of the base portion cases 221 so as to be capable of swinging about a horizontal axis P' that extends in the left-right direction, leg belts 225 that are attached to the leg arms 223 and each have a hook-and-loop fastener 224, and the like.

As shown in FIG. 30, the base portion cases 221 are each approximately L-shaped in a view from above. As shown in FIG. 29, the left and right base portion cases 221 are approximately bilaterally symmetrical with each other. As shown in FIGS. 28, 29, and 31, the base portion cases 221 house therein the leg motors 222 for driving the leg arms 223, and drive mechanisms for decelerating drive power that is transmitted from the leg motors 222 to the leg arms 223. As shown in FIG. 28, the left and right leg belts 225 are attached to leg portions of the worker by being wrapped around thigh portions of the worker and then engaging portions of the hook-and-loop fasteners 224. The leg arms 223 can be swung relative to the base portion cases 221 by driving the corresponding left and right leg motors 222. Drive force from the leg motors 222 is transmitted to the thigh portions of the worker via the corresponding leg arms 223 and leg belts 225.

The left and right leg motors 222 are both an electrical motor constituted by a servomotor or the like. The left and right leg motors 222 are each driven with use of electrical power supplied by the battery 205, in accordance with instructions from the control device 204.

The waist assist device 203 performs assistance between an upper limit angle and a lower limit angle that are set regarding the arm angles of the leg arms 223 (the angle of the leg arms 223 relative to the base portion cases 221). In other words, the waist assist device 203 provides assistance in an angle range that is set regarding the arm angles of the leg arms 223. The leg arms 223 can swing while the waist assist device 203 is not providing assistance.

### Raising switch and lowering switch

As shown in FIGS. 28 and 29, out of the left and right hand portions 212, the hand portion 212 on one side (right side) is provided with a raising switch 226, and the hand portion 212 on the other side (left side) is provided with a lowering switch 227. The raising switch 226 and the lowering switch 227 are connected to the control device 204. The raising switch 226 is operated when the load is to be lifted, and the lowering switch 227 is operated when the load is to be lowered. The arm assist device 202 and the waist assist device 203 are driven in coordination based on operations performed on the raising switch 226 or the lowering switch 227. Note that if the raising switch 226 and the lowering switch 227 are both operated at the same time, the operations performed on the raising switch 226 and the lowering switch 227 are both invalidated.

As shown in FIGS. 28 to 30, a right switch case 236 is provided on the right outward side of the right base portion case 221. As shown in FIGS. 29 and 30, a left switch case 240 is provided on the left outward side of the left base portion case 221. The left switch case 240 and the right switch case 236 are arranged on the left and right sides, and are centered about the main body portion 201. The upper surface side of the right switch case 236 is provided with various switches such as a push-type power switch 238. The left switch case 240 is also provided with switches that have different functions than the switches provided in the right switch case 236.

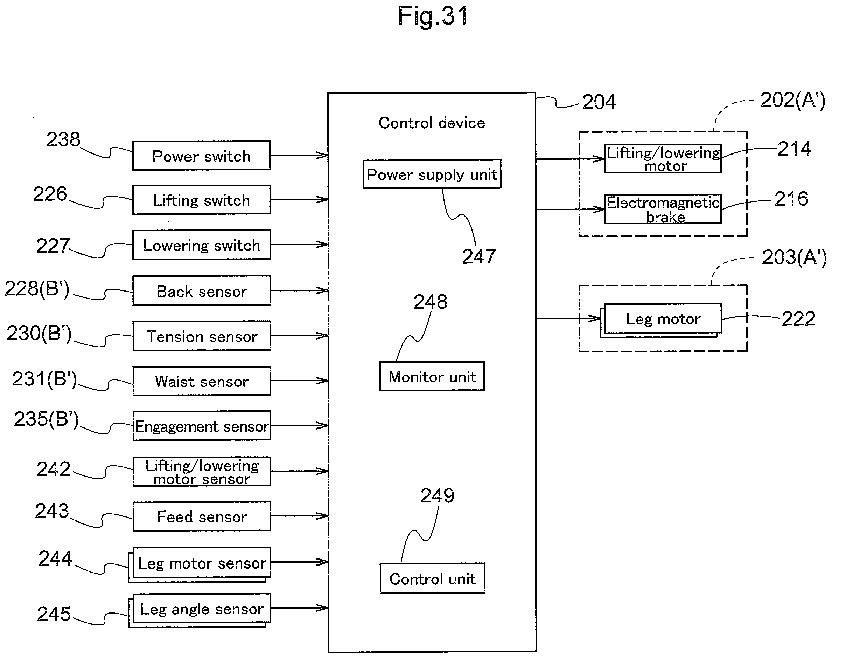

As shown in FIG. 31, the assist suit includes sensors such as a lifting/lowering motor sensor 242 that detects the rotation speed of the lifting/lowering motor 214, a feed sensor 243 that detects the feed amount of the inner wires 219 based on the rotation speed of the reel mechanism 213, leg motor sensors 244 that detect the rotation speeds of the leg motors 222, and leg angle sensors 245 that detect the arm angles of the leg arms 223.

As shown in FIG. 31, the leg motor sensors 244 and the lifting/lowering motor sensor 242 are each constituted by a rotary encoder or the like. Also, the leg angle sensors 245 and the feed sensor 243 are each constituted by a potentiometer or the like. Output signals from the lifting/lowering motor sensor 242, the feed sensor 243, the leg motor sensors 244, and the leg angle sensors 245 are input to the control device 204.

### Detection sensors

As shown in FIG. 31, the assist suit includes detection sensors B'that can detect attachment to a worker, as sensors that are different from the sensors described above. The detection sensors B' include back sensors 228 that can detect pressing force from the back portion of the worker when the assist suit is worn, tension sensors 230 that can detect tension in the shoulder belts 208, a waist sensor 231 that can detect pressing force from the waist portion of the worker when the assist suit is worn, and an engagement sensor 235 that can detect engagement of the pair of belt portions 233.

The back sensors 228 are arranged on the back surface side of the back pad 229, which is the side opposite to the back portion of the worker. The back sensors 228 are constituted by pressure-sensing sensors, for example.

The tension sensors 230 are constituted by tension detectors, for example.

The waist sensor 231 is arranged on the back surface side of the waist pad 232, which is the side opposite to the waist portion of the worker. The waist sensor 231 is constituted by a pressure-sensing sensor, for example.

The engagement sensor 235 is provided in the buckle portion 234. The engagement sensor 235 is constituted by a contact-type sensor, for example.

### Control configuration

As shown in FIG. 31, the control device 204 includes a power supply unit 247 that controls the supply of power from the battery 205, a monitor unit 248 that monitors input signals from the detection sensors B', a control unit 249 that controls the driving of the driving devices A', and the like.

Based on an operation performed on the power switch 238, the power supply unit 247 can switch between an on mode in which electrical power can be supplied from the battery 205 to various elements, and an off mode in which electrical power is not supplied from the battery 205 to various elements.

The monitor unit 248 is configured to output a drive permission signal to the control unit 249 if input signals are output from the detection sensors B' (if it has been detected that the assist suit is being worn by the worker), and output a drive prohibition signal to the control unit 249 if input signals are not output from the detection sensors B' (if it has not been detected that the assist suit is being worn by the worker).

The control unit 249 controls the driving of the lifting/lowering motor 214 and the electromagnetic brake 216 of the arm assist device 202 and the leg motors 222 of the waist assist device 203 with use of electrical power from the battery 205, based on input operations performed on the raising switch 226 and the lowering switch 227.

The control unit 249 is configured to permit the driving of the driving devices A' if the detection sensors B' have detected that the assist suit is being worn by the worker, and prohibit the driving of the driving devices A' if the detection sensors B' have not detected that the assist suit is being worn by the worker. The control unit 249 detects that the detection sensors B' have detected that the assist suit is being worn by the worker, based on the drive permission signal received from the monitor unit 248. Also, the control unit 249 detects that the detection sensors B' have not detected that the assist suit is being worn by the worker, based on the drive prohibition signal received from the monitor unit 248.

### Basic operation aspects of assist suit

The following describes basic operation aspects of the assist suit having the above-described structure.

When a load placed on the ground or floor is to be picked up and moved to a high location for example, first, the lowering switch 227 is pressed for a certain duration. Accordingly, the inner wires 219 are fed from the reel mechanism 213 of the arm assist device 202 such that the left and right hand portions 212 are lowered, and then when the left and right hand portions 212 have been lowered to a certain extent, the leg arms 223 of the waist assist device 203 are driven in a direction for knee bending in order to assist the worker when squatting. The left and right hand portions 212 are hooked onto the load, and then the raising switch 226 is pressed for a certain duration. Accordingly, the inner wires 219 are wound by the reel mechanism 213 of the arm assist device 202 such that the left and right hand portions 212 supporting the load are raised, and the leg arms 223 of the waist assist device 203 are driven in a direction for knee extending in order to assist the worker when standing up. Accordingly, the arm assist device 202 supplements the arm muscular strength of the worker, and the waist assist device 203 supplements the leg/waist muscular strength of the worker, thus making it possible to easily lift the load.

When the raising switch 226 stops being pressed and the lifting of the hand portions 212 stops, the electromagnetic brake 216 generates braking force, and the left and right hand portions 212 supporting the load are maintained at a desired height. When the assistance provided by the waist assist device 203 is complete, the leg arms 223 enter a swingable state. The standing-up assistance provided by the waist assist device 203 ends before the left and right hand portions 212 of the arm assist device 202 have been lifted to the upper limit position, and therefore the left and right hand portions 212 supporting the load are maintained at the desired height, and the worker can freely walk and move the load to a predetermined location without using much arm muscular strength.

When the load is to be placed at the predetermined location, the lowering switch 227 is pressed for a certain duration. Accordingly, the inner wires 219 are fed out from the reel mechanism 213 of the arm assist device 202, and the left and right hand portions 212 supporting the load are lowered. If the load is to be placed at a low height, the waist assist device 203 is also driven in order to assist the worker when squatting. When the load has been placed at the predetermined location, the load moving operation is complete.

The assist suit operates only when the worker is wearing the assist suit and the worn state is detected by the detection sensors B', and does not operate when the worker is not wearing the assist suit and the worn state is not detected by the detection sensors B'. Accordingly, it is possible to prevent mistaken operation when the assist suit is not being worn, and to avoid problems caused by mistaken operation of the driving devices A' when the assist suit is not being worn, such as the assist suit falling over while at rest and becoming damaged, or unexpected operations being performed while the worker is wearing the assist suit.

### Other aspects of third embodiment

The following describes other aspects that can be combined with the third embodiment. Two or more of the following other aspects can be combined with the third embodiment as long as no contradiction arises. Note that the scope of the present invention is not intended to be limited to the content illustrated in the following aspects.
(1) In the third embodiment, an example is illustrated in which the back sensors 228 are arranged on the back surface side of the back pads 229, which is the side opposite to the worker's back, but there is no limitation to this. For example, the back sensors 228 may be arranged inside the back pads 229, or may be provided on the front surface side of the back pads 229 (locations of contact with the worker's back).
(2) In the third embodiment, an example is illustrated in which the waist sensor 231 is arranged on the back surface side of the waist pads 232, which is the side opposite to the worker's waist, but there is no limitation to this. For example, the waist sensor 231 may be arranged inside the waist pad 232, or may be provided on the front surface side of the waist pad 232 (locations of contact with the worker's waist).
(3) In the third embodiment, the sensors include the back sensors 228 constituted by pressure-sensing sensors, the tension sensors 230 constituted by tension detectors, the waist sensor 231 constituted by a pressure-sensing sensor, and the engagement sensor 235 constituted by a contact-type sensor, but there is no limitation to this. The back sensors 228, the tension sensors 230, the waist sensor 231, and the engagement sensor 235 may perform detection using different detection techniques.
(4) In the third embodiment, an example is illustrated in which the control unit 249 permits the driving of the driving devices A' only if the back sensors 228, the tension sensors 230, the waist sensor 231, and the engagement sensor 235 have all detected that the assist suit is being worn, but there is no limitation to this. For example, the control unit 249 may permit the driving of the driving devices A' if at least one of the back sensors 228, the tension sensors 230, the waist sensor 231, and the engagement sensor 235 has detected that the assist suit is being worn.
(5) In the third embodiment, an example is illustrated in which the back sensors 228, the tension sensors 230, the waist sensor 231, and the engagement sensor 235 are provided as the detection sensors B', but there is no limitation to this. Any of the back sensors 228, the tension sensors 230, the waist sensor 231, and the engagement sensor 235 may be omitted. In other words, it is sufficient that at least one of the back sensors 228, the tension sensors 230, the waist sensor 231, and the engagement sensor 235 is provided. Also, the detection sensors B' may include other sensors, such as leg sensors that detect that the leg belts 225 have been attached.
(6) In the third embodiment, an example is illustrated in which the monitor unit 248 provided in the control device 204 monitors signals from the detection sensors B', and the control unit 249 permits or prohibits the driving of the driving devices A' based on the monitoring result, but there is no limitation to this. For example, instead of the monitor unit 248, a relay circuit that allows electrical conduction if the detection sensors B' have detected that the assist suit is being worn and cuts off conduction if the detection sensors B' have not detected that the assist suit is being worn may be provided along the path connecting the raising switch 226 and the control device 204 and along the path connecting the lowering switch 227 and the control device 204. In this case, if the detection sensors B' have not detected that the assist suit is being worn, the relay circuits enter the cut-off state such that operation signals from the raising switch 226 and the lowering switch 227 will not be input to the control device 204, and therefore when the assist suit is not being worn, operations input to the raising switch 226 and the lowering switch 227 are invalidated, and the driving of the driving devices A' is prohibited by the control unit 249.
(7) In the third embodiment, an example is illustrated in which the waist assist device 203 and the arm assist device 202 are provided as two types of driving devices A', but there is no limitation to this. For example, a configuration is possible in which only the waist assist device 203 or the arm assist device 202 is provided as the driving device A'.
(8) In the third embodiment, an example is illustrated in which a load is the target object, but there is no limitation to this. For example, the target object may be an agricultural product planted in a field. In this case, the agricultural product can be pulled from the field and lifted up with assistance from the arm assist device 202.
(9) The structure may be inverted in the left-right direction in the third embodiment.
(10) The present invention is applicable to an assist suit that can assist target object lifting and lowering movements made by a worker.

### Description of Reference Signs

- 15: base portion
- 18, 19: suspension mechanism
- 23, 24: manual operation portion
- 28: holding portion
- 29: support portion
- 31: lateral portion of base portion
- 32: upper portion of base portion
- 33: lower portion of base portion
- 34: protruding portion of base portion
- 37: first stopper portion
- 42b: second stopper portion
- 43: first recessed portion of support portion
- 44: second recessed portion of support portion
- 101:: main body portion
- 102:: arm assist device
- 103:: waist assist device
- 139:: switching switch (reset switch)
- 141:: setting switch
- A:: driving device
- C:: left-right center
- 208:: shoulder belt
- 228:: back sensor
- 229:: back pad
- 230:: tension sensor
- 231:: waist sensor
- 232:: waist pad
- 233:: belt portion
- 234:: buckle portion
- 235:: engagement sensor
- 249:: control unit
- A':: driving device
- B':: detection sensor

## Claims

1. A hand portion for load-holding comprising:
a base portion configured to be connected to a suspension mechanism;
a manual operation portion that is provided on the base portion and is for operating the suspension mechanism; and
a support portion that can be attached to and detached from the base portion and which has a holding portion for holding a package.

2. The hand portion for load-holding according to claim 1,
wherein the base portion has a vertically oriented lateral portion, an upper portion that extends to one lateral side from an upper portion of the lateral portion, and a lower portion that extends to the same lateral side as the upper portion from a lower portion of the lateral portion, and
the support portion is attached between the upper portion and the lower portion in a state of contact with the upper portion and the lower portion.

3. The hand portion for load-holding according to claim 2,
wherein a protruding portion that protrudes toward the upper portion is formed on an end portion of the lower portion on a side opposite to the lateral portion, and
the support portion is attached between the upper portion and the lower portion by being inserted between the upper portion and the lower portion and between the lateral portion and the protruding portion, at an end portion of the base portion on one side in a direction along the lateral portion.

4. The hand portion for load-holding according to claim 3, further comprising:
an orientation-changeable first stopper portion configured to change between a disengaged orientation of allowing insertion of the support portion at the end portion of the base portion on the one side in the direction along the lateral portion, and an engaged orientation of stopping movement of the support portion toward the end portion of the base portion on the one side in the direction along the lateral portion in a state where the support portion is attached between the upper portion and the lower portion; and
a second stopper portion configured to stop movement of the support portion toward an end portion of the base portion on an other side in the direction along the lateral portion in a state where the support portion is attached between the upper portion and the lower portion.

5. The hand portion for load-holding according to any one of claims 1 to 4,
wherein the holding portion and the support portion are separate members, and the holding portion is attached to the support portion.

6. The hand portion for load-holding according to claim 5,
wherein the base portion has a vertically oriented lateral portion, an upper portion that extends to one lateral side from an upper portion of the lateral portion, and a lower portion that extends to the same lateral side as the upper portion from a lower portion of the lateral portion,
the support portion is attached between the upper portion and the lower portion in a state of contact with the upper portion and the lower portion,
a first recessed portion is provided in a portion of the support portion on a side corresponding to the upper portion,
a second recessed portion is provided in a portion of the support portion on a side corresponding to the lateral portion, and is in communication with the first recessed portion, and
the holding portion is attached to the support portion by being fitted into the first recessed portion on a side opposite to the second recessed portion, and extending from the first recessed portion into the second recessed portion.

7. The hand portion for load-holding according to any one of claims 1 to 6,
wherein the support portion provided with the holding portion having a different specification can be attached to and detached from the base portion.

8. An assist suit comprising:
a main body portion configured to be attached to a back portion of a worker;
a driving device configured to assist a movement of the worker;
a setting switch configured to enable manually setting an assist characteristic of assistance provided by the driving device; and
a reset switch configured to enable manually resetting the assist characteristic setting set by the setting switch,
wherein the reset switch is arranged at a position biased to one side of a left-right center of the main body portion, and the setting switch is arranged at a position biased to an other side of the left-right center of the main body portion.

9. The assist suit according to claim 8,
wherein the reset switch enables switching to an other mode having a different assist effect by a short-press operation, and enables resetting the assist characteristic setting by a long-press operation having a longer press time than the short-press operation.

10. The assist suit according to claim 8 or 9,
wherein the setting switch enables switching to an adjustment mode for adjustment of the assist characteristic by a press operation, and
in the adjustment mode, the assist characteristic setting can be reset by operating the reset switch.

11. The assist suit according to any one of claims 8 to 10,
wherein when the reset switch is operated, the assist characteristic is reset to a pre-set standard value.

12. The assist suit according to any one of claims 8 to 11,
wherein a waist assist device configured to assist a stand-up movement of a worker is provided as the driving device, and
at least one of an upper limit angle and a lower limit angle of an angle range of assist power generated by the waist assist device is included as a parameter that defines the assist characteristic pertaining to the waist assist device, and in the adjustment mode, at least one of the upper limit angle and the lower limit angle can be changed.

13. The assist suit according to any one of claims 8 to 12,
wherein an arm assist device configured to suspend a target object and assist a target object lifting movement is provided as the driving device, and
at least one of an upper limit height and a lower limit height of a target object suspension position height range of assist power generated by the arm assist device is included as a parameter that defines the assist characteristic pertaining to the arm assist device, and in the adjustment mode, at least one of the upper limit height and the lower limit height can be changed.

14. The assist suit according to any one of claims 8 to 13,
wherein when the reset switch is operated, the assist characteristic setting pertaining to a waist assist device that is the driving device and the assist characteristic setting pertaining to an arm assist device that is the driving device are both reset together when the reset switch is operated.

15. An assist suit comprising:
a driving device configured to assist a movement of a worker;
a control unit configured to control driving of the driving device; and
a detection sensor configured to detect that the assist suit is being worn by a worker,
wherein the control unit is configured to permit driving of the driving device if the detection sensor has detected that the assist suit is being worn by the worker, and prohibit driving of the driving device if the detection sensor has not detected that the assist suit is being worn by the worker.

16. The assist suit according to claim 15,
wherein a back sensor configured to detect pressing force from a back portion of the worker when wearing the assist suit is provided as the detection sensor.

17. The assist suit according to claim 16, further comprising:
a back pad configured to come into contact with the back portion of the worker when wearing the assist suit,
wherein the back sensor is arranged on a back surface side of the back pad that is on a side opposite to the back portion of the worker.

18. The assist suit according to any one of claims 15 to 17, further comprising:
a shoulder belt configured to be placed on a shoulder portion of the worker,
wherein a tension sensor configured to detect tension of the shoulder belt is provided as the detection sensor.

19. The assist suit according to any one of claims 15 to 18,
wherein a waist sensor configured to detect pressing force from a waist portion of the worker when wearing the assist suit is provided as the detection sensor.

20. The assist suit according to claim 19, further comprising:
a waist pad configured to come into contact with the waist portion of the worker when wearing the assist suit,
wherein the waist sensor is arranged on a back surface side of the waist pad that is on a side opposite to the waist portion of the worker.

21. The assist suit according to any one of claims 15 to 20, further comprising:
a waist belt configured to be wrapped around and attached to a waist portion of the worker by engagement of a pair of belt portions with each other,
wherein an engagement sensor configured to detect engagement of the pair of belt portions is provided as the detection sensor.
